(19) Europäisches Patentamt
European Patent Office
Office européen des brevets

(11) **EP 4 750 194 A1**

(12) **EUROPEAN PATENT APPLICATION**
published in accordance with Art. 153(4) EPC

(43) Date of publication:
**27.05.2026 Bulletin 2026/22**

(21) Application number: **24853464.6**

(22) Date of filing: **15.07.2024**

(51) International Patent Classification (IPC):
***H04W 72/0446*** *(2023.01)*

(52) Cooperative Patent Classification (CPC):
**H04L 5/00; H04W 24/02; H04W 24/10;
H04W 72/0446; H04W 72/23**

(86) International application number:
**PCT/CN2024/105518**

(87) International publication number:
**WO 2025/036052 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023 CN 202311021141**

(71) Applicant: **Huawei Technologies Co., Ltd.
Shenzhen, Guangdong 518129 (CN)**

(72) Inventors:
• **XUAN, Yidi**
  **Shenzhen, Guangdong 518129 (CN)**
• **WANG, Yi**
  **Shenzhen, Guangdong 518129 (CN)**
• **GUAN, Lei**
  **Shenzhen, Guangdong 518129 (CN)**
• **LI, Ruijie**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **CHANNEL STATE INFORMATION TRANSMISSION METHOD, AND APPARATUS**

(57)     A channel state information CSI transmission method and an apparatus are provided. The CSI transmission method includes: receiving first configuration information, where the first configuration information indicates L sub-configurations, and each of the L sub-configurations indicates at least one reference signal resource in a reference signal resource set; determining, based on the first configuration information, a first time domain resource corresponding to M sub-configurations, where the M sub-configurations belong to the L sub-configurations; and sending a first CSI report, where the first CSI report includes N pieces of first CSI, the N pieces of first CSI are determined based on N first sub-configurations, at least one reference signal resource indicated by the first sub-configuration includes a first reference signal resource, and the first reference signal resource is not later than a first time domain resource corresponding to the first sub-configuration in time domain. According to the solution of this application, discarding or updating is performed on a per-sub-configuration basis. This ensures normal CSI reporting of a terminal device while fully exploiting CSI reporting resources and computation capabilities.

FIG. 7

EP 4 750 194 A1

# EP 4 750 194 A1

## Description

This application claims priority to Chinese Patent Application No. 202311021141.7, filed with the China National Intellectual Property Administration on August 11, 2023 and entitled "CHANNEL STATE INFORMATION TRANSMISSION METHOD AND APPARATUS", which is incorporated herein by reference in its entirety.

## TECHNICAL FIELD

This application relates to the communication field, and more specifically, to a channel state information transmission method and an apparatus.

## BACKGROUND

With gradual evolution of communication systems, "low carbon", especially how to reduce energy consumption of network devices (for example, base stations), has attracted increasing attention in communication networks. Currently, transmit power can be reduced by dynamically disabling partial transmit antennas. In the case of dynamic antenna disabling, a terminal device may perform channel state information (channel state information, CSI) measurement for different antenna disabling scenarios, and report CSI measurement results to a network device to facilitate data scheduling. The terminal device includes a plurality of pieces of CSI in a single CSI report. If CSI report discarding and updating are performed according to existing standards, it may lead to the terminal device failing to function normally or cause a waste of performance. Therefore, how to report, update, and discard CSI reports is a problem to be urgently resolved.

## SUMMARY

This application provides a channel state information CSI transmission method and an apparatus. When a CSI report includes a plurality of pieces of CSI, the report is discarded or updated based on a related rule for a reference resource, computation time, or a CSI processing unit corresponding to each sub-configuration, so that normal CSI reporting of a terminal device is ensured, and a CSI reporting resource and a computational capability can be fully utilized.

According to a first aspect, a channel state information CSI transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: receiving first configuration information, where the first configuration information indicates L sub-configurations, each of the L sub-configurations indicates at least one reference signal resource in a reference signal resource set, and L is a positive integer; determining, based on the first configuration information, a first time domain resource corresponding to M sub-configurations, where the M sub-configurations belong to the L sub-configurations, and M is a positive integer less than or equal to L; and sending a first CSI report, where the first CSI report includes N pieces of first CSI, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain, and N is a positive integer less than or equal to M.

It should be understood that the first time domain resource is a CSI reference resource (CSI reference resource), or a time domain resource corresponding to a CSI reference resource.

According to the solution of this application, when a CSI report includes a plurality of pieces of CSI, a rule for discarding or reporting CSI information corresponding to each sub-configuration for a CSI reference resource of each sub-configuration is defined, to ensure normal CSI report reporting of the terminal device.

With reference to the first aspect, in some implementations of the first aspect, the N first sub-configurations are determined from the M sub-configurations based on time domain locations of the first time domain resource and reference signal resources indicated by the M sub-configurations.

With reference to the first aspect, in some implementations of the first aspect, the first reference signal resource is further located in a first time segment, and the first time segment is a discontinuous reception DRX active time segment of a terminal device.

With reference to the first aspect, in some implementations of the first aspect, the N first sub-configurations are determined from the M sub-configurations based on time domain locations of the first time domain resource, reference signal resources indicated by the M sub-configurations, and the first time segment, where the at least one reference signal resource indicated by the first sub-configuration includes the first reference signal resource, the first reference signal resource is not later than a first time domain resource corresponding to the first sub-configuration in time domain and is located in the first time segment, and the first time segment is a discontinuous reception DRX active time segment of a terminal device.

With reference to the first aspect, in some implementations of the first aspect, M-N pieces of second CSI are discarded, where the M-N pieces of second CSI correspond to M-N second sub-configurations, the M-N second sub-configurations are sub-configurations other than the N first sub-configurations in the M sub-configurations, and reference signal resources indicated by the second sub-configurations are all later than first time domain resources corresponding to the second sub-configurations in time domain.

With reference to the first aspect, in some implementations of the first aspect, the first configuration information indicates any one of reconfiguration, serving cell activation, bandwidth part BWP switching, and semi-persistent CSI activation.

With reference to the first aspect, in some implementations of the first aspect, M first time domain resources are determined based on the first configuration information, where the M first time domain resources are in one-to-one correspondence with the M sub-configurations, and a time domain location of the first time domain resource is determined based on a reference signal resource indicated by a sub-configuration corresponding to the first time domain resource.

With reference to the first aspect, in some implementations of the first aspect, one first time domain resource is determined based on the first configuration information, where a time domain location of the first time domain resource is determined based on a reference signal resource indicated by the L sub-configurations.

It should be understood that the M sub-configurations are sub-configurations that are of the L sub-configurations and that are triggered by a network device.

According to a second aspect, a CSI transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: receiving first configuration information, where the first configuration information indicates L sub-configurations, each of the L sub-configurations indicates at least one reference signal resource in a reference signal resource set, and L is a positive integer; determining M second time domain resources based on a last reference signal resource in time domain indicated by each of M sub-configurations, where the M sub-configurations belong to the L sub-configurations, the M second time domain resources are in one-to-one correspondence with the M sub-configurations, and M is a positive integer less than or equal to L; and sending a second CSI report on a first CSI reporting resource, where the second CSI report includes A pieces of third CSI, the A pieces of third CSI are updated based on A third sub-configurations, a second time domain resource corresponding to the third sub-configuration is earlier than the first CSI reporting resource in time domain, the first CSI reporting resource is indicated by the first configuration information, and A is a positive integer less than or equal to M.

According to the solution of this application, when a CSI report includes a plurality of pieces of CSI, a rule for reporting or updating CSI information corresponding to each sub-configuration for CSI computation time of each sub-configuration is defined, to ensure that the terminal device fully utilizes a CSI computational capability.

With reference to the second aspect, in some implementations of the second aspect, M second time domain resources are determined based on a last reference signal resource in time domain indicated by each of M sub-configurations.

With reference to the second aspect, in some implementations of the second aspect, the second CSI report further includes M-A pieces of non-updated fourth CSI, the M-A pieces of fourth CSI correspond to M-A fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

With reference to the second aspect, in some implementations of the second aspect, M-A fourth sub-configurations are determined from the M sub-configurations based on the M second time domain resources, where the M-A fourth sub-configurations are sub-configurations other than the A third sub-configurations in the M sub-configurations, and a second time domain resource corresponding to the fourth sub-configuration is later than the first CSI reporting resource in time domain.

With reference to the second aspect, in some implementations of the second aspect, the second time domain resource and a last reference signal resource in time domain indicated by a corresponding sub-configuration are spaced apart by a first value, and the first value is CSI computation time.

It should be understood that the first value may be preset or determined based on the first configuration information.

According to a third aspect, a CSI transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: receiving first configuration information, where the first configuration information indicates L sub-configurations, each of the L sub-configurations indicates at least one reference signal resource in a reference signal resource set, and L is a positive integer; determining a quantity P of available CSI processing units CPUs in a first time unit, where P is a positive integer, the first time unit is a time unit used to start processing CSI computation corresponding to M sub-configurations indicated by the first configuration information, and the M sub-configurations belong to the L sub-configurations; and sending a third CSI report, where the third CSI report includes B pieces of fifth CSI and M-B pieces of sixth CSI, the B pieces of fifth CSI are updated based on B fifth sub-configurations, the M-B pieces of sixth CSI correspond to M-B sixth sub-configurations, a sum of quantities of CPUs corresponding to the B fifth sub-configurations is less than or equal to the quantity P of available CPUs, and priorities corresponding to the B fifth sub-configurations are higher than priorities corresponding to the M-B sixth sub-configurations, M is a positive integer less than or equal to L, and B is a positive integer less than or equal to M.

According to the solution of this application, when a CSI report includes a plurality of pieces of CSI, a rule for discarding or updating CSI information corresponding to each sub-configuration for a quantity of CPUs corresponding to each sub-configuration is defined, to ensure that the terminal device fully utilizes a CSI reporting resource.

With reference to the third aspect, in some implementations of the third aspect, quantities of CPUs corresponding to the M sub-configurations are determined based on a quantity of reference signal resources indicated by each sub-configuration.

With reference to the third aspect, in some implementations of the third aspect, priorities corresponding to the M sub-configurations are determined based on an index corresponding to each sub-configuration.

Optionally, a sum of quantities of CPUs corresponding to the B fifth sub-configurations and a quantity of CPUs corresponding to any sixth sub-configuration is greater than a quantity P of available CPUs.

According to a fourth aspect, a CSI transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: receiving first configuration information and second configuration information, where the first configuration information indicates L sub-configurations and a first CSI reporting resource, each of the first sub-configurations indicates at least one reference signal resource in a reference signal resource set, the second configuration information indicates a second CSI reporting resource, the first CSI reporting resource is used to report a first CSI report, the second CSI reporting resource is used to report a second CSI report, and L is a positive integer; determining the first CSI report based on the first configuration information, where the first CSI report includes L pieces of seventh CSI, the L pieces of seventh CSI are determined based on the L sub-configurations, the pieces of seventh CSI include L first parts and L second parts, the L first parts indicate at least one of a rank indicator RI, a resource indicator CRI, and a channel quality indicator CQI of a first codebook, and the L second parts indicate any one of a wideband CQI, a wideband layer indicator LI, a wideband precoding matrix indicator PMI, and sub-band CSI of a second codebook; determining the second CSI report based on the second configuration information, where a priority corresponding to the second CSI report is higher than a priority corresponding to the first CSI report; determining, when the first CSI reporting resource and the second CSI reporting resource are located on a same carrier and include a same time domain resource, a third CSI reporting resource based on third configuration information; and sending the second CSI report and a third CSI report on the third CSI reporting resource, where the third CSI report is determined based on a sequence of priorities of the L first parts and the L second parts.

According to the solution of this application, when a CSI report includes a plurality of pieces of CSI, if reporting resources of two CSI reports overlap, a rule for discarding CSI corresponding to each sub-configuration for a priority corresponding to each sub-configuration is defined, so that reporting resources can be fully utilized, to ensure reporting of important CSI.

With reference to the fourth aspect, in some implementations of the fourth aspect, the priorities corresponding to the L first parts are determined based on priorities corresponding to the L sub-configurations.

It should be understood that the priorities corresponding to the L first parts are higher than the priorities corresponding to the L second parts.

With reference to the fourth aspect, in some implementations of the fourth aspect, the L second parts include L pieces of wideband CSI and L pieces of sub-band CSI, priorities of the L pieces of wideband CSI are higher than priorities of the L pieces of sub-band CSI, a sequence of the priorities of the L pieces of sub-band CSI is determined based on the priorities corresponding to the L sub-configurations, the pieces of sub-band CSI include odd-numbered sub-band CSI and even-numbered sub-band CSI, and a priority of the odd-numbered sub-band CSI is higher than that of the even-numbered sub-band CSI.

With reference to the fourth aspect, in some implementations of the fourth aspect, the L second parts include L pieces of wideband CSI, L pieces of odd-numbered sub-band CSI, and L pieces of even-numbered sub-band CSI, priorities of the L pieces of wideband CSI are higher than priorities of the L pieces of odd-numbered sub-band CSI, the priorities of the L pieces of odd-numbered sub-band CSI are higher than priorities of the L pieces of even-numbered sub-band CSI, a sequence of the priorities of the L pieces of odd-numbered sub-band CSI is determined based on the priorities corresponding to the L sub-configurations, and a sequence of the priorities of the L pieces of even-numbered sub-band CSI is determined based on the priorities corresponding to the L sub-configurations.

With reference to the fourth aspect, in some implementations of the fourth aspect, the priorities corresponding to the L sub-configurations are determined based on an index corresponding to each sub-configuration.

According to a fifth aspect, a CSI transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: receiving first configuration information, where the first configuration information indicates L sub-configurations, each of the L sub-configurations indicates at least one reference signal resource in a reference signal resource set, and L is a positive integer; determining, based on the first configuration information, a first time domain resource corresponding to M sub-configurations, where the M sub-configurations belong to the L sub-configurations, and M is a positive integer less than or equal to L; and sending a first CSI report on a first CSI reporting resource, where the first CSI reporting resource is indicated by the first configuration information, the first CSI report includes N pieces of first CSI, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain, and N is a positive integer less than or equal to M.

With reference to the fifth aspect, in some implementations of the fifth aspect, M-N pieces of second CSI are discarded, where the M-N pieces of second CSI correspond to M-N second sub-configurations, the M-N second sub-configurations are sub-configurations other than the N first sub-configurations in the M sub-configurations, and reference signal resources indicated by the second sub-configurations are all later than first time domain resources corresponding to the second sub-configurations in time domain.

With reference to the fifth aspect, in some implementations of the fifth aspect, the first CSI report includes A pieces of third CSI, the pieces of third CSI are updated based on A third sub-configurations, a second time domain resource corresponding to the third sub-configuration is earlier than the first CSI reporting resource in time domain, the second time domain resource is determined based on a last reference signal resource in time domain indicated by each of the M sub-configurations, the M sub-configurations are in one-to-one correspondence with the M second time domain resources, M is a positive integer less than or equal to L, and A is a positive integer less than or equal to M.

With reference to the fifth aspect, in some implementations of the fifth aspect, the first CSI report further includes M-A pieces of non-updated fourth CSI, the M-A pieces of fourth CSI correspond to M-A fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

With reference to the fifth aspect, in some implementations of the fifth aspect, a quantity P of available CSI processing units CPUs in a first time unit is determined, where the first time unit is a time unit used to start processing CSI computation corresponding to M sub-configurations indicated by the first configuration information, the M sub-configurations belong to the L sub-configurations, and P is a positive integer; and the first CSI report includes B pieces of fifth CSI and M-B pieces of sixth CSI, the B pieces of fifth CSI are updated based on the B sixth sub-configurations, the M-B pieces of sixth CSI correspond to M-B sixth sub-configurations, a sum of quantities of CPUs corresponding to the B fifth sub-configurations is less than or equal to the quantity P of available CPUs, and priorities corresponding to the B fifth sub-configurations are higher than priorities corresponding to the M-B sixth sub-configurations, M is a positive integer less than or equal to L, and B is an integer less than or equal to M.

With reference to the fifth aspect, in some implementations of the fifth aspect, the first reference signal resource is further located in a first time segment, and the first time segment is a discontinuous reception DRX active time segment of a terminal device.

With reference to the fifth aspect, in some implementations of the fifth aspect, the first configuration information indicates any one of reconfiguration, serving cell activation, bandwidth part BWP switching, and semi-persistent CSI activation.

With reference to the fifth aspect, in some implementations of the fifth aspect, M first time domain resources are determined based on the first configuration information, where the M first time domain resources are in one-to-one correspondence with the M sub-configurations, and a time domain location of the first time domain resource is determined based on a reference signal resource indicated by a sub-configuration corresponding to the first time domain resource.

With reference to the fifth aspect, in some implementations of the fifth aspect, one first time domain resource is determined based on the first configuration information, where a time domain location of the first time domain resource is determined based on a reference signal resource indicated by the L sub-configurations.

It should be understood that the M sub-configurations are sub-configurations that are of the L sub-configurations and that are triggered by a network device.

With reference to the fifth aspect, in some implementations of the fifth aspect, the second time domain resource and a last reference signal resource in time domain indicated by a corresponding sub-configuration are spaced apart by a first value, and the first value is CSI computation time.

With reference to the fifth aspect, in some implementations of the fifth aspect, quantities of CPUs corresponding to the M sub-configurations are determined based on a quantity of reference signal resources indicated by each sub-configuration.

With reference to the fifth aspect, in some implementations of the fifth aspect, priorities corresponding to the M sub-configurations are determined based on an index corresponding to each sub-configuration.

Optionally, a sum of quantities of CPUs corresponding to the B fourth sub-configurations and a quantity of CPUs corresponding to any fifth sub-configuration is greater than a quantity P of available CPUs.

According to a sixth aspect, a CSI transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: receiving first configuration information, where the first configuration information indicates L sub-configurations, each of the L sub-configurations indicates at least one reference signal resource in a reference signal resource set, and L is a positive integer; determining M first time domain resources, where the M first time domain resources are in one-to-one correspondence with M sub-configurations, the M sub-configurations belong to the L sub-configurations, and M is a positive integer less than or equal to L; and sending a first CSI report when a reference signal resource indicated by any sub-configuration of the M sub-configurations includes at least one reference signal resource that is not later than a first time domain resource corresponding to the any sub-configuration in time domain, where the first CSI report includes M pieces of first CSI, and the M pieces of first CSI are determined based on the M sub-configurations.

With reference to the sixth aspect, in some implementations of the sixth aspect, when the M sub-configurations include first sub-configurations, the M pieces of first CSI are discarded if a reference signal resource indicated by each of the first sub-configurations is later than a first time domain resource corresponding to the first sub-configuration in time domain, where the M pieces of first CSI are determined based on the M sub-configurations.

With reference to the sixth aspect, in some implementations of the sixth aspect, the first reference signal resource is further located in a first time segment, and the first time segment is a discontinuous reception DRX active time segment of a terminal device.

With reference to the sixth aspect, in some implementations of the sixth aspect, the first configuration information indicates any one of reconfiguration, serving cell activation, bandwidth part BWP switching, and semi-persistent CSI activation.

With reference to the sixth aspect, in some implementations of the sixth aspect, the time domain location of the first time domain resource is determined based on the first configuration information.

It should be understood that the M sub-configurations are sub-configurations that are of the L sub-configurations and that are triggered by a network device.

According to a seventh aspect, a CSI transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: sending first configuration information, where the first configuration information indicates L sub-configurations, each of the L sub-configurations indicates at least one reference signal resource in a reference signal resource set, and L is a positive integer; and receiving a first CSI report, where the first CSI report includes N pieces of first CSI, the N pieces of first CSI are determined based on N first sub-configurations, at least one reference signal resource indicated by the first sub-configuration includes a first reference signal resource, the first reference signal resource is earlier than a first time domain resource corresponding to the first sub-configuration in time domain, the first time domain resource corresponds to M sub-configurations, the first time domain resource is determined based on the first configuration information, the M sub-configurations belong to the L sub-configurations, M is a positive integer less than or equal to L, and N is a positive integer less than or equal to M.

With reference to the seventh aspect, in some implementations of the seventh aspect, the first reference signal resource is further located in a first time segment, and the first time segment is a discontinuous reception DRX active time segment of a terminal device.

With reference to the seventh aspect, in some implementations of the seventh aspect, the first configuration information indicates any one of reconfiguration, serving cell activation, bandwidth part BWP switching, and semi-persistent CSI activation.

With reference to the seventh aspect, in some implementations of the seventh aspect, the M first time domain resources are determined based on the first configuration information, the M first time domain resources are in one-to-one correspondence with the M sub-configurations, and a time domain location of the first time domain resource is determined based on a reference signal resource indicated by a sub-configuration corresponding to the first time domain resource.

With reference to the seventh aspect, in some implementations of the seventh aspect, one first time domain resource corresponds to M sub-configurations, the one first time domain resource is determined based on the first configuration information, and a time domain location of the first time domain resource is determined based on a reference signal resource indicated by the L sub-configurations.

It should be understood that the M sub-configurations are sub-configurations that are of the L sub-configurations and that are triggered by a network device.

According to an eighth aspect, a CSI transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: sending first configuration information, where the first configuration information indicates L sub-configurations, each of the L sub-configurations indicates at least one reference signal resource in a reference signal resource set, and L is a positive integer; and receiving a second CSI report on a first CSI reporting resource, where the second CSI report includes A pieces of third CSI, the A pieces of third CSI are updated based on A third sub-configurations, a second time domain resource corresponding to the third sub-configuration is earlier than the first CSI reporting resource in time domain, the second time domain resource is determined based on a last reference signal resource in time domain indicated by each of the M sub-configurations, the M sub-configurations are in one-to-one correspondence with the M second time domain resources, the first CSI reporting resource is indicated by the first configuration information, M is a positive integer less than or equal to L, and A is a positive integer less than or equal to M.

With reference to the eighth aspect, in some implementations of the eighth aspect, the second CSI report further includes M-A pieces of non-updated fourth CSI, the M-A pieces of fourth CSI correspond to M-A fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

With reference to the eighth aspect, in some implementations of the eighth aspect, the second time domain resource and a last reference signal resource in time domain indicated by a corresponding sub-configuration are spaced apart by a first value, and the first value is CSI computation time.

According to a ninth aspect, a CSI transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: sending first configuration information, where the first configuration information indicates L sub-configurations, each of the L sub-configurations indicates at least one reference signal resource in a reference signal resource set, and L is a positive integer; and receiving a third CSI report, where the third CSI report includes B pieces of fifth CSI and M-B pieces of sixth CSI, the B pieces of fifth CSI are updated based on B fifth sub-configurations, the M-B pieces of sixth CSI correspond to M-B sixth sub-configurations, a sum of quantities of CSI processing units CPUs corresponding to the B fifth sub-configurations is less than or equal to the quantity P of available CPUs, and priorities corresponding to the B fifth sub-configurations are higher than priorities corresponding to the M-B sixth sub-configurations, the quantity P of available CPUs corresponds to a first time unit, the first time unit is a time unit used to start processing CSI computation corresponding to M sub-configurations indicated by the first configuration information, the M sub-configurations belong to the L sub-configurations, P is a positive integer, M is a positive integer less than or equal to L, and B is a positive integer less than or equal to M.

With reference to the ninth aspect, in some implementations of the ninth aspect, quantities of CPUs corresponding to the M sub-configurations are determined based on a quantity of reference signal resources indicated by each sub-configuration.

With reference to the ninth aspect, in some implementations of the ninth aspect, priorities corresponding to the M sub-configurations are determined based on an index corresponding to each sub-configuration.

Optionally, a sum of quantities of CPUs corresponding to the B fifth sub-configurations and a quantity of CPUs corresponding to any sixth sub-configuration is greater than a quantity P of available CPUs.

According to a tenth aspect, a CSI transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: sending first configuration information and second configuration information, where the first configuration information indicates L sub-configurations and a first CSI reporting resource, each of the first sub-configurations indicates at least one reference signal resource in a reference signal resource set, the second configuration information indicates a second CSI reporting resource, the first CSI reporting resource is used to report a first CSI report, a third CSI reporting resource is used to report a third CSI report, and L is a positive integer; and receiving, when the first CSI reporting resource and the third CSI reporting resource are located on a same carrier and include a same time domain resource, the third CSI report and a fourth CSI report on a fourth CSI reporting resource, where the fourth CSI report is determined based on a sequence of priorities of L first parts and L second parts, the first CSI report is determined based on the first configuration information, the first CSI report includes L pieces of seventh CSI, the L pieces of seventh CSI are determined based on the L sub-configurations, the pieces of seventh CSI include L first parts and L second parts, the L first parts indicate at least one of a rank indicator RI, a resource indicator CRI, and a channel quality indicator CQI of a first codebook, the L second parts indicate any one of a wideband CQI, a wideband layer indicator LI, a wideband precoding matrix indicator PMI, and sub-band CSI of a second codebook, the third CSI report is determined based on the second configuration information, a priority corresponding to the third CSI report is higher than a priority corresponding to the first CSI report, and the fourth CSI reporting resource is determined based on third configuration information.

With reference to the tenth aspect, in some implementations of the tenth aspect, the priorities corresponding to the L first parts are determined based on priorities corresponding to the L sub-configurations.

With reference to the tenth aspect, in some implementations of the tenth aspect, the L second parts include L pieces of wideband CSI and L pieces of sub-band CSI, priorities of the L pieces of wideband CSI are higher than priorities of the L pieces of sub-band CSI, a sequence of the priorities of the L pieces of sub-band CSI is determined based on the priorities corresponding to the L sub-configurations, the pieces of sub-band CSI include odd-numbered sub-band CSI and even-numbered sub-band CSI, and a priority of the odd-numbered sub-band CSI is higher than that of the even-numbered sub-band CSI.

With reference to the tenth aspect, in some implementations of the tenth aspect, the L second parts include L pieces of wideband CSI, L pieces of odd-numbered sub-band CSI, and L pieces of even-numbered sub-band CSI, priorities of the L pieces of wideband CSI are higher than priorities of the L pieces of odd-numbered sub-band CSI, the priorities of the L pieces of odd-numbered sub-band CSI are higher than priorities of the L pieces of even-numbered sub-band CSI, a sequence of the priorities of the L pieces of odd-numbered sub-band CSI is determined based on the priorities corresponding to the L sub-configurations, and a sequence of the priorities of the L pieces of even-numbered sub-band CSI is determined based on the priorities corresponding to the L sub-configurations.

With reference to the tenth aspect, in some implementations of the tenth aspect, the priorities corresponding to the L sub-configurations are determined based on an index corresponding to each sub-configuration.

According to an eleventh aspect, a CSI transmission method is provided. The method may be performed by a network device, may be performed by a module (for example, a processor, a chip, or a chip system) used in a network device, or may be implemented by a logical node, a logical module, or software that can implement all or a part of functions of a network device.

The method includes: sending first configuration information, where the first configuration information indicates L sub-configurations, each of the L sub-configurations indicates at least one reference signal resource in a reference signal resource set, and L is a positive integer; and receiving a first CSI report on a first CSI reporting resource, where the first CSI reporting resource is indicated by the first configuration information, the first CSI report includes N pieces of first CSI, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain, the first time domain resource is determined based on the first configuration information, the first time domain resource corresponds to M sub-configurations, the M sub-configurations belong to the L sub-configurations, N is a positive integer less than or equal to M, and M is a positive integer less than or equal to L.

With reference to the eleventh aspect, in some implementations of the eleventh aspect, the first CSI report includes A pieces of third CSI, the pieces of third CSI are updated based on A third sub-configurations, the A third sub-configurations are determined from the M sub-configurations based on time domain locations of the M second time domain resources and the first CSI reporting resource, a second time domain resource corresponding to the third sub-configuration is earlier than the first CSI reporting resource in time domain, the M second time domain resource is determined based on a last reference signal resource in time domain indicated by each of the M sub-configurations, the M second time domain resources are in one-to-one correspondence with the M sub-configurations, M is a positive integer less than or equal to L, and A is a positive integer less than or equal to M.

With reference to the eleventh aspect, in some implementations of the eleventh aspect, the first CSI report further includes M-A pieces of non-updated fourth CSI, the M-A pieces of fourth CSI correspond to M-A fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

With reference to the eleventh aspect, in some implementations of the eleventh aspect, the first CSI report includes B pieces of fifth CSI and M-B pieces of sixth CSI, the B pieces of fifth CSI are updated based on B fifth sub-configurations, the M-B pieces of sixth CSI correspond to M-B sixth sub-configurations, and the B fifth sub-configurations and the M-B sixth sub-configurations are determined based on a quantity P of the available CPUs, a quantity of CPUs corresponding to the M sub-configurations, and priorities corresponding to the M sub-configurations, where a sum of quantities of CPUs corresponding to the B fifth sub-configurations is less than or equal to the quantity P of available CPUs, and priorities corresponding to the B fifth sub-configurations are higher than priorities corresponding to the M-B sixth sub-configurations, the quantity P of available CSI processing units CPUs corresponds to a first time unit, P is a positive integer, the first time unit is a time unit used to start processing CSI computation corresponding to M sub-configurations indicated by the first configuration information, M is a positive integer less than or equal to L, and B is an integer less than or equal to M.

With reference to the eleventh aspect, in some implementations of the eleventh aspect, the first reference signal resource is further located in a first time segment, and the first time segment is a discontinuous reception DRX active time segment of a terminal device.

With reference to the eleventh aspect, in some implementations of the eleventh aspect, the first configuration information indicates any one of reconfiguration, serving cell activation, bandwidth part BWP switching, and semi-persistent CSI activation.

With reference to the eleventh aspect, in some implementations of the eleventh aspect, the M first time domain resources are determined based on the first configuration information, the M first time domain resources are in one-to-one correspondence with the M sub-configurations, and a time domain location of the first time domain resource is determined based on a reference signal resource indicated by a sub-configuration corresponding to the first time domain resource.

With reference to the eleventh aspect, in some implementations of the eleventh aspect, one first time domain resource is determined based on the first configuration information, and a time domain location of the first time domain resource is determined based on a reference signal resource indicated by the L sub-configurations.

It should be understood that the M sub-configurations are sub-configurations that are of the L sub-configurations and that are triggered by a network device.

With reference to the eleventh aspect, in some implementations of the eleventh aspect, the second time domain resource and a last reference signal resource in time domain indicated by a corresponding sub-configuration are spaced apart by a first value, and the first value is CSI computation time.

With reference to the eleventh aspect, in some implementations of the eleventh aspect, quantities of CPUs corresponding to the M sub-configurations are determined based on a quantity of reference signal resources indicated by each sub-configuration.

With reference to the eleventh aspect, in some implementations of the eleventh aspect, priorities corresponding to the M sub-configurations are determined based on an index corresponding to each sub-configuration.

Optionally, a sum of quantities of CPUs corresponding to the B fifth sub-configurations and a quantity of CPUs corresponding to any sixth sub-configuration is greater than a quantity P of available CPUs.

According to a twelfth aspect, a CSI transmission method is provided. The method may be performed by a terminal device, may be performed by a module (for example, a processor, a chip, or a chip system) used in a terminal device, or may be implemented by a logical node, a logical module, or software that can implement all or a part of functions of a terminal device.

The method includes: sending first configuration information, where the first configuration information indicates L sub-configurations, each of the L sub-configurations indicates at least one reference signal resource in a reference signal resource set, the reference signal resource is used for channel measurement, and L is a positive integer; and receiving a first CSI report when a reference signal resource indicated by any sub-configuration of the M sub-configurations includes at least one reference signal resource that is not later than a first time domain resource corresponding to the any sub-configuration in time domain, where the first CSI report includes M pieces of first CSI, the M pieces of first CSI are determined based on the M sub-configurations, the M first time domain resources are in one-to-one correspondence with M sub-configurations, the M sub-configurations belong to the L sub-configurations, and M is a positive integer less than or equal to L.

With reference to the twelfth aspect, in some implementations of the twelfth aspect, when at least one reference signal resource indicated by any sub-configuration includes at least one reference signal resource that is earlier than a first time domain resource corresponding to the any sub-configuration in time domain and is further located in a first time segment, the first time segment is a discontinuous reception DRX active time segment of a terminal device.

With reference to the twelfth aspect, in some implementations of the twelfth aspect, the first configuration information indicates any one of reconfiguration, serving cell activation, bandwidth part BWP switching, and semi-persistent CSI activation.

With reference to the twelfth aspect, in some implementations of the twelfth aspect, the time domain location of the first time domain resource is determined based on the first configuration information.

It should be understood that the M sub-configurations are sub-configurations that are of the L sub-configurations and that are triggered by a network device.

According to a thirteenth aspect, a channel state information CSI transmission apparatus is provided. The apparatus includes: an interface unit, configured to receive first configuration information, where the first configuration information indicates L sub-configurations, each of the L sub-configurations indicates at least one reference signal resource in a reference signal resource set, and L is a positive integer; and

a processing unit, configured to determine, based on the first configuration information, a first time domain resource corresponding to M sub-configurations, where the M sub-configurations belong to the L sub-configurations, and M is a positive integer less than or equal to L; and

the interface unit is further configured to send a first CSI report, where the first CSI report includes N pieces of first CSI, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain, and N is a positive integer less than or equal to M.

With reference to the thirteenth aspect, in some implementations of the thirteenth aspect, the processing unit is configured to determine the N first sub-configurations from the M sub-configurations based on time domain locations of the first time domain resource and reference signal resources indicated by the M sub-configurations.

With reference to the thirteenth aspect, in some implementations of the thirteenth aspect, the first reference signal resource is further located in a first time segment, and the first time segment is a discontinuous reception DRX active time segment of a terminal device.

With reference to the thirteenth aspect, in some implementations of the thirteenth aspect, the processing unit is configured to determine the N first sub-configurations from the M sub-configurations based on time domain locations of the first time domain resource, reference signal resources indicated by the M sub-configurations, and the first time segment, where the at least one reference signal resource indicated by the first sub-configuration includes the first reference signal resource, the first reference signal resource is not later than a first time domain resource corresponding to the first sub-configuration in time domain and is located in the first time segment, and the first time segment is a discontinuous reception DRX active time segment of a terminal device.

With reference to the thirteenth aspect, in some implementations of the thirteenth aspect, the processing unit is configured to discard M-N pieces of second CSI, where the M-N pieces of second CSI correspond to M-N second sub-configurations, the M-N second sub-configurations are sub-configurations other than the N first sub-configurations in the M sub-configurations, and reference signal resources indicated by the second sub-configurations are all later than first time domain resources corresponding to the second sub-configurations in time domain.

With reference to the thirteenth aspect, in some implementations of the thirteenth aspect, the first configuration information indicates any one of reconfiguration, serving cell activation, bandwidth part BWP switching, and semi-persistent CSI activation.

With reference to the thirteenth aspect, in some implementations of the thirteenth aspect, the processing unit is specifically configured to determine M first time domain resources based on the first configuration information, where the M first time domain resources are in one-to-one correspondence with the M sub-configurations, and a time domain location of the first time domain resource is determined based on a reference signal resource indicated by a sub-configuration corresponding to the first time domain resource.

With reference to the thirteenth aspect, in some implementations of the thirteenth aspect, the processing unit is specifically configured to determine one first time domain resource based on the first configuration information, where a time domain location of the first time domain resource is determined based on a reference signal resource indicated by the L sub-configurations.

It should be understood that the M sub-configurations are sub-configurations that are of the L sub-configurations and that are triggered by a network device.

According to a fourteenth aspect, a CSI transmission apparatus is provided. The apparatus includes: an interface unit, configured to receive first configuration information, where the first configuration information indicates L sub-configurations, each of the L sub-configurations indicates at least one reference signal resource in a reference signal resource set, and L is a positive integer; and

a processing unit, configured to determine M second time domain resources based on a last reference signal resource in time domain indicated by each of M sub-configurations, where the M sub-configurations belong to the L sub-configurations, the M second time domain resources are in one-to-one correspondence with the M sub-configurations, and M is a positive integer less than or equal to L; and

the interface unit is further configured to send a second CSI report on a first CSI reporting resource, where the second CSI report includes A pieces of third CSI, the A pieces of third CSI are updated based on A third sub-configurations, a second time domain resource corresponding to the third sub-configuration is earlier than the first CSI reporting resource in time domain, the first CSI reporting resource is indicated by the first configuration information, and A is a positive integer less than or equal to M.

With reference to the fourteenth aspect, in some implementations of the fourteenth aspect, the processing unit is configured to determine M second time domain resources based on a last reference signal resource in time domain indicated by each of M sub-configurations.

With reference to the fourteenth aspect, in some implementations of the fourteenth aspect, the second CSI report further includes M-A pieces of non-updated fourth CSI, the M-A pieces of fourth CSI correspond to MA fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

With reference to the fourteenth aspect, in some implementations of the fourteenth aspect, the processing unit is further configured to determine M-A fourth sub-configurations from the M sub-configurations based on the M second time domain resources, where the M-A fourth sub-configurations are sub-configurations other than the A third sub-configurations in the M sub-configurations, and a second time domain resource corresponding to the fourth sub-configuration is later than the first CSI reporting resource in time domain; and the third CSI report further includes M-A pieces of non-updated fourth CSI, and the M-A pieces of fourth CSI correspond to the M-A fourth sub-configurations.

With reference to the fourteenth aspect, in some implementations of the fourteenth aspect, the second time domain resource and a last reference signal resource in time domain indicated by a corresponding sub-configuration are spaced apart by a first value, and the first value is CSI computation time.

According to a fifteenth aspect, a CSI transmission apparatus is provided. The apparatus includes: an interface unit, configured to receive first configuration information, where the first configuration information indicates L sub-configurations, each of the L sub-configurations indicates at least one reference signal resource in a reference signal resource set, and L is a positive integer; and

a processing unit, configured to determine a quantity P of available CSI processing units CPUs in a first time unit, where P is a positive integer, the first time unit is a time unit used to start processing CSI computation corresponding to M sub-configurations indicated by the first configuration information, and the M sub-configurations belong to the L sub-configurations; and

the interface unit is further configured to send a third CSI report, where the third CSI report includes B pieces of fifth CSI and M-B pieces of sixth CSI, the B pieces of fifth CSI are updated based on B fifth sub-configurations, the M-B pieces of sixth CSI correspond to M-B sixth sub-configurations, a sum of quantities of CPUs corresponding to the B fifth sub-configurations is less than or equal to the quantity P of available CPUs, and priorities corresponding to the B fifth sub-configurations are higher than priorities corresponding to the M-B sixth sub-configurations, M is a positive integer less than or equal to L, and B is a positive integer less than or equal to M.

With reference to the fifteenth aspect, in some implementations of the fifteenth aspect, quantities of CPUs corresponding to the M sub-configurations are determined based on a quantity of reference signal resources indicated by each sub-configuration.

With reference to the fifteenth aspect, in some implementations of the fifteenth aspect, priorities corresponding to the M sub-configurations are determined based on an index corresponding to each sub-configuration.

Optionally, a sum of quantities of CPUs corresponding to the B fifth sub-configurations and a quantity of CPUs corresponding to any sixth sub-configuration is greater than a quantity P of available CPUs.

According to a sixteenth aspect, a CSI transmission apparatus is provided. The apparatus includes: an interface unit, configured to receive first configuration information and second configuration information, where the first configuration information indicates L sub-configurations and a first CSI reporting resource, each of the first sub-configurations indicates at least one reference signal resource in a reference signal resource set, the second configuration information indicates a second CSI reporting resource, the first CSI reporting resource is used to report a first CSI report, the second CSI reporting resource is used to report a second CSI report, and L is a positive integer; and

a processing unit, configured to: determine the first CSI report based on the first configuration information, where the first CSI report includes L pieces of seventh CSI, the L pieces of seventh CSI are determined based on the L sub-configurations, the pieces of seventh CSI include L first parts and L second parts, the L first parts indicate at least one of a rank indicator RI, a resource indicator CRI, and a channel quality indicator CQI of a first codebook, and the L second parts indicate any one of a wideband CQI, a wideband layer indicator LI, a wideband precoding matrix indicator PMI, and sub-band CSI of a second codebook; determine the second CSI report based on the second configuration information, where a priority corresponding to the second CSI report is higher than a priority corresponding to the first CSI report; and determine, when the first CSI reporting resource and the second CSI reporting resource are located on a same carrier and include a same time domain resource, a third CSI reporting resource based on third configuration information; and

the interface unit is further configured to send the second CSI report and a third CSI report on the third CSI reporting resource, where the third CSI report is determined based on a sequence of priorities of the L first parts and the L second parts.

With reference to the sixteenth aspect, in some implementations of the sixteenth aspect, the priorities corresponding to the L first parts are determined based on priorities corresponding to the L sub-configurations.

With reference to the sixteenth aspect, in some implementations of the sixteenth aspect, the L second parts include L pieces of wideband CSI and L pieces of sub-band CSI, priorities of the L pieces of wideband CSI are higher than priorities of the L pieces of sub-band CSI, a sequence of the priorities of the L pieces of sub-band CSI is determined based on the priorities corresponding to the L sub-configurations, the pieces of sub-band CSI include odd-numbered sub-band CSI and even-numbered sub-band CSI, and a priority of the odd-numbered sub-band CSI is higher than that of the even-numbered sub-band CSI.

With reference to the sixteenth aspect, in some implementations of the sixteenth aspect, the L second parts include L pieces of wideband CSI, L pieces of odd-numbered sub-band CSI, and L pieces of even-numbered sub-band CSI, priorities of the L pieces of wideband CSI are higher than priorities of the L pieces of odd-numbered sub-band CSI, the priorities of the L pieces of odd-numbered sub-band CSI are higher than priorities of the L pieces of even-numbered sub-band CSI, a sequence of the priorities of the L pieces of odd-numbered sub-band CSI is determined based on the priorities corresponding to the L sub-configurations, and a sequence of the priorities of the L pieces of even-numbered sub-band CSI is determined based on the priorities corresponding to the L sub-configurations.

With reference to the sixteenth aspect, in some implementations of the sixteenth aspect, the priorities corresponding to the L sub-configurations are determined based on an index corresponding to each sub-configuration.

According to a seventeenth aspect, a CSI transmission apparatus is provided. The apparatus includes: an interface unit, configured to receive first configuration information, where the first configuration information indicates L sub-configurations, each of the L sub-configurations indicates at least one reference signal resource in a reference signal resource set, and L is a positive integer; and

a processing unit, configured to determine, based on the first configuration information, a first time domain resource corresponding to M sub-configurations, where the M sub-configurations belong to the L sub-configurations, and M is a positive integer less than or equal to L; and

the interface unit is further configured to send a first CSI report on a first CSI reporting resource, where the first CSI reporting resource is indicated by the first configuration information, the first CSI report includes N pieces of first CSI, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain, and N is a positive integer less than or equal to M.

With reference to the seventeenth aspect, in some implementations of the seventeenth aspect, the processing unit is configured to discard M-N pieces of second CSI, where the M-N pieces of second CSI correspond to M-N second sub-configurations, the M-N second sub-configurations are sub-configurations other than the N first sub-configurations in the M sub-configurations, and reference signal resources indicated by the second sub-configurations are all later than first time domain resources corresponding to the second sub-configurations in time domain.

With reference to the seventeenth aspect, in some implementations of the seventeenth aspect, the first CSI report includes A pieces of third CSI, these pieces of second CSI are updated based on A third sub-configurations, a second time domain resource corresponding to the third sub-configuration is earlier than the first CSI reporting resource in time domain, the second time domain resource is determined based on a last reference signal resource in time domain indicated by each of the M sub-configurations, the M sub-configurations are in one-to-one correspondence with the M second time domain resources, M is a positive integer less than or equal to L, and A is a positive integer less than or equal to M.

With reference to the seventeenth aspect, in some implementations of the seventeenth aspect, the first CSI report further includes M-A pieces of non-updated fourth CSI, the M-A pieces of fourth CSI correspond to MA fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

With reference to the seventeenth aspect, in some implementations of the seventeenth aspect, the processing unit determines a quantity P of available CSI processing units CPUs in a first time unit, where the first time unit is a time unit used to start processing CSI computation corresponding to M sub-configurations indicated by the first configuration information, the M sub-configurations belong to the L sub-configurations, and P is a positive integer; and

the first CSI report includes B pieces of fifth CSI and M-B pieces of sixth CSI, the B pieces of fifth CSI are updated based on the B fifth sub-configurations, the M-B pieces of sixth CSI correspond to M-B sixth sub-configurations, a sum of quantities of CPUs corresponding to the B fifth sub-configurations is less than or equal to the quantity P of available CPUs, and priorities corresponding to the B fifth sub-configurations are higher than priorities corresponding to the M-B sixth sub-configurations, M is a positive integer less than or equal to L, and B is an integer less than or equal to M.

With reference to the seventeenth aspect, in some implementations of the seventeenth aspect, the first reference signal resource is further located in a first time segment, and the first time segment is a discontinuous reception DRX active time segment of a terminal device.

With reference to the seventeenth aspect, in some implementations of the seventeenth aspect, the first configuration information indicates any one of reconfiguration, serving cell activation, bandwidth part BWP switching, and semi-persistent CSI activation.

With reference to the seventeenth aspect, in some implementations of the seventeenth aspect, the processing unit is specifically configured to determine M first time domain resources based on the first configuration information, where the M first time domain resources are in one-to-one correspondence with the M sub-configurations, and a time domain location of the first time domain resource is determined based on a reference signal resource indicated by a sub-configuration corresponding to the first time domain resource.

With reference to the seventeenth aspect, in some implementations of the seventeenth aspect, the processing unit is specifically configured to determine one first time domain resource based on the first configuration information, where a time domain location of the first time domain resource is determined based on a reference signal resource indicated by the L sub-configurations.

It should be understood that the M sub-configurations are sub-configurations that are of the L sub-configurations and that are triggered by a network device.

With reference to the seventeenth aspect, in some implementations of the seventeenth aspect, the second time domain resource and a last reference signal resource in time domain indicated by a corresponding sub-configuration are spaced apart by a first value, and the first value is preset or determined based on the first configuration information.

With reference to the seventeenth aspect, in some implementations of the seventeenth aspect, quantities of CPUs corresponding to the M sub-configurations are determined based on a quantity of reference signal resources indicated by each sub-configuration.

With reference to the seventeenth aspect, in some implementations of the seventeenth aspect, priorities corresponding to the M sub-configurations are determined based on an index corresponding to each sub-configuration.

Optionally, a sum of quantities of CPUs corresponding to the B fourth sub-configurations and a quantity of CPUs corresponding to any fifth sub-configuration is greater than a quantity P of available CPUs.

According to an eighteenth aspect, a CSI transmission apparatus is provided. The apparatus includes: an interface unit, configured to receive first configuration information, where the first configuration information indicates L sub-configurations, each of the L sub-configurations indicates at least one reference signal resource in a reference signal resource set, and L is a positive integer; and

a processing unit, configured to determine M first time domain resources, where the M first time domain resources are in one-to-one correspondence with M sub-configurations, the M sub-configurations belong to the L sub-configurations, and M is a positive integer less than or equal to L; and

the interface unit is further configured to send a first CSI report when a reference signal resource indicated by any sub-configuration of the M sub-configurations includes at least one reference signal resource that is not later than a first time domain resource corresponding to the any sub-configuration in time domain, where the first CSI report includes M pieces of first CSI, and the M pieces of first CSI are determined based on the M sub-configurations.

With reference to the eighteenth aspect, in some implementations of the eighteenth aspect, the interface unit is further configured to discard, when the M sub-configurations include first sub-configurations, the M pieces of first CSI if a reference signal resource indicated by each of the first sub-configurations is later than a first time domain resource corresponding to the first sub-configuration in time domain, where the M pieces of first CSI are determined based on the M sub-configurations.

With reference to the eighteenth aspect, in some implementations of the eighteenth aspect, the first reference signal resource is further located in a first time segment, and the first time segment is a discontinuous reception DRX active time segment of a terminal device.

With reference to the eighteenth aspect, in some implementations of the eighteenth aspect, the first configuration information indicates any one of reconfiguration, serving cell activation, bandwidth part BWP switching, and semi-persistent CSI activation.

With reference to the eighteenth aspect, in some implementations of the eighteenth aspect, the time domain location of the first time domain resource is determined based on the first configuration information.

It should be understood that the M sub-configurations are sub-configurations that are of the L sub-configurations and that are triggered by a network device.

According to a nineteenth aspect, a CSI transmission apparatus is provided. The apparatus includes: an interface unit, configured to: send first configuration information, where the first configuration information indicates L sub-configurations, each of the L sub-configurations indicates at least one reference signal resource in a reference signal resource set, and L is a positive integer; and receive a first CSI report, where the first CSI report includes N pieces of first CSI, the N pieces of first CSI are determined based on N first sub-configurations, at least one reference signal resource indicated by the first sub-configuration includes a first reference signal resource, the first reference signal resource is earlier than a first time domain resource corresponding to the first sub-configuration in time domain, the first time domain resource corresponds to M sub-configurations, the first time domain resource is determined based on the first configuration information, the M sub-configurations belong to the L sub-configurations, M is a positive integer less than or equal to L, and N is a positive integer less than or equal to M.

With reference to the nineteenth aspect, in some implementations of the nineteenth aspect, the first reference signal resource is further located in a first time segment, and the first time segment is a discontinuous reception DRX active time segment of a terminal device.

With reference to the nineteenth aspect, in some implementations of the nineteenth aspect, the first configuration information indicates any one of reconfiguration, serving cell activation, bandwidth part BWP switching, and semi-persistent CSI activation.

With reference to the nineteenth aspect, in some implementations of the nineteenth aspect, the M first time domain resources are determined based on the first configuration information, the M first time domain resources are in one-to-one correspondence with the M sub-configurations, and a time domain location of the first time domain resource is determined based on a reference signal resource indicated by a sub-configuration corresponding to the first time domain resource.

With reference to the nineteenth aspect, in some implementations of the nineteenth aspect, one first time domain resource is determined based on the first configuration information, and a time domain location of the first time domain resource is determined based on a reference signal resource indicated by the L sub-configurations.

It should be understood that the M sub-configurations are sub-configurations that are of the L sub-configurations and that are triggered by a network device.

According to a twentieth aspect, a CSI transmission apparatus is provided. The apparatus includes: an interface unit, configured to: send first configuration information, where the first configuration information indicates L sub-configurations, each of the L sub-configurations indicates at least one reference signal resource in a reference signal resource set, and L is a positive integer; and receive a second CSI report on a first CSI reporting resource, where the second CSI report includes A pieces of third CSI, the A pieces of third CSI are updated based on A third sub-configurations, a second time domain resource corresponding to the third sub-configuration is earlier than the first CSI reporting resource in time domain, the second time domain resource is determined based on a last reference signal resource in time domain indicated by each of the M sub-configurations, the M sub-configurations are in one-to-one correspondence with the M second time domain resources, the first CSI reporting resource is indicated by the first configuration information, M is a positive integer less than or equal to L, and A is a positive integer less than or equal to M.

With reference to the twentieth aspect, in some implementations of the twentieth aspect, the third CSI report further includes M-A pieces of non-updated fourth CSI, the M-A pieces of fourth CSI correspond to M-A fourth sub-configurations, the M-A fourth sub-configurations are determined from the M sub-configurations based on the M second time domain resources, the M-A fourth sub-configurations are sub-configurations other than the A third sub-configurations in the M sub-configurations, and a second time domain resource corresponding to the fourth sub-configuration is later than the first CSI reporting resource in time domain.

With reference to the twentieth aspect, in some implementations of the twentieth aspect, the second time domain resource and a last reference signal resource in time domain indicated by a corresponding sub-configuration are spaced apart by a first value, and the first value is preset or determined based on the first configuration information.

According to a twenty-first aspect, a CSI transmission apparatus is provided. The apparatus includes: an interface unit, configured to: send first configuration information, where the first configuration information indicates L sub-configurations, each of the L sub-configurations indicates at least one reference signal resource in a reference signal resource set, the reference signal resource is used for channel measurement, and L is a positive integer; and receive a third CSI report, where the third CSI report includes B pieces of fifth CSI and M-B pieces of sixth CSI, the B pieces of fifth CSI are updated based on B fifth sub-configurations, the M-B pieces of sixth CSI correspond to M-B sixth sub-configurations, a sum of quantities of CSI processing units CPUs corresponding to the B fifth sub-configurations is less than or equal to the quantity P of available CPUs, and priorities corresponding to the B fifth sub-configurations are higher than priorities corresponding to the M-B sixth sub-configurations, the quantity P of available CPUs corresponds to a first time unit, the first time unit is a time unit used to start processing CSI computation corresponding to M sub-configurations indicated by the first configuration information, the M sub-configurations belong to the L sub-configurations, P is a positive integer, M is a positive integer less than or equal to L, and B is a positive integer less than or equal to M.

With reference to the twenty-first aspect, in some implementations of the twenty-first aspect, quantities of CPUs corresponding to the M sub-configurations are determined based on a quantity of reference signal resources indicated by each sub-configuration.

With reference to the twenty-first aspect, in some implementations of the twenty-first aspect, priorities corresponding to the M sub-configurations are determined based on an index corresponding to each sub-configuration.

Optionally, a sum of quantities of CPUs corresponding to the B fifth sub-configurations and a quantity of CPUs corresponding to any sixth sub-configuration is greater than a quantity P of available CPUs.

According to a twenty-second aspect, a CSI transmission apparatus is provided. The apparatus includes: an interface unit, configured to: send first configuration information and second configuration information, where the first configuration information indicates L sub-configurations and a first CSI reporting resource, each of the first sub-configurations indicates at least one reference signal resource in a reference signal resource set, the second configuration information indicates a second CSI reporting resource, the first CSI reporting resource is used to report a first CSI report, the second CSI reporting resource is used to report a second CSI report, and L is a positive integer; and receive, when the first CSI reporting resource and the second CSI reporting resource are located on a same carrier and include a same time domain resource, the second CSI report and a third CSI report on a third CSI reporting resource, where the third CSI report is determined based on a sequence of priorities of L first parts and L second parts, the first CSI report is determined based on the first configuration information, the first CSI report includes L pieces of seventh CSI, the L pieces of seventh CSI are determined based on the L sub-configurations, these pieces of first CSI include L first parts and L second parts, the L first parts indicate at least one of a rank indicator RI, a resource indicator CRI, and a channel quality indicator CQI of a first codebook, the L second parts indicate any one of a wideband CQI, a wideband layer indicator LI, a wideband precoding matrix indicator PMI, and sub-band CSI of a second codebook, the second CSI report is determined based on the second configuration information, a priority corresponding to the second CSI report is higher than a priority corresponding to the first CSI report, and the third CSI reporting resource is determined based on third configuration information.

With reference to the twenty-second aspect, in some implementations of the twenty-second aspect, the priorities corresponding to the L first parts are determined based on priorities corresponding to the L sub-configurations.

With reference to the twenty-second aspect, in some implementations of the twenty-second aspect, the L second parts include L pieces of wideband CSI and L pieces of sub-band CSI, priorities of the L pieces of wideband CSI are higher than priorities of the L pieces of sub-band CSI, a sequence of the priorities of the L pieces of sub-band CSI is determined based on the priorities corresponding to the L sub-configurations, the pieces of sub-band CSI include odd-numbered sub-band CSI and even-numbered sub-band CSI, and a priority of the odd-numbered sub-band CSI is higher than that of the even-numbered sub-band CSI.

With reference to the twenty-second aspect, in some implementations of the twenty-second aspect, the L second parts include L pieces of wideband CSI, L pieces of odd-numbered sub-band CSI, and L pieces of even-numbered sub-band CSI, priorities of the L pieces of wideband CSI are higher than priorities of the L pieces of odd-numbered sub-band CSI, the priorities of the L pieces of odd-numbered sub-band CSI are higher than priorities of the L pieces of even-numbered sub-band CSI, a sequence of the priorities of the L pieces of odd-numbered sub-band CSI is determined based on the priorities corresponding to the L sub-configurations, and a sequence of the priorities of the L pieces of even-numbered sub-band CSI is determined based on the priorities corresponding to the L sub-configurations.

With reference to the twenty-second aspect, in some implementations of the twenty-second aspect, the priorities corresponding to the L sub-configurations are determined based on an index corresponding to each sub-configuration.

According to a twenty-third aspect, a CSI transmission apparatus is provided. The apparatus includes: an interface unit, configured to: send first configuration information, where the first configuration information indicates L sub-configurations, each of the L sub-configurations indicates at least one reference signal resource in a reference signal resource set, the reference signal resource is used for channel measurement, and L is a positive integer; and receive a first CSI report on a first CSI reporting resource, where the first CSI reporting resource is indicated by the first configuration information, the first CSI report includes N pieces of first CSI, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain, the first time domain resource is determined based on the first configuration information, the first time domain resource corresponds to M sub-configurations, the M sub-configurations belong to the L sub-configurations, N is a positive integer less than or equal to M, and M is a positive integer less than or equal to L.

With reference to the twenty-third aspect, in some implementations of the twenty-third aspect, the first CSI report includes A pieces of third CSI, the pieces of third CSI are updated based on A third sub-configurations, the A third sub-configurations are determined from the M sub-configurations based on time domain locations of the M second time domain resources and the first CSI reporting resource, a second time domain resource corresponding to the third sub-configuration is earlier than the first CSI reporting resource in time domain, the M second time domain resource is determined based on a last reference signal resource in time domain indicated by each of the M sub-configurations, the M second time domain resources are in one-to-one correspondence with the M sub-configurations, M is a positive integer less than or equal to L, and A is a positive integer less than or equal to M.

With reference to the twenty-third aspect, in some implementations of the twenty-third aspect, the first CSI report includes B pieces of fifth CSI and M-B pieces of sixth CSI, the B pieces of fifth CSI are updated based on B fifth sub-configurations, the M-B pieces of sixth CSI correspond to M-B sixth sub-configurations, and the B fifth sub-configurations and the M-B sixth sub-configurations are determined based on a quantity P of the available CPUs, a quantity of CPUs corresponding to the M sub-configurations, and priorities corresponding to the M sub-configurations, where a sum of quantities of CPUs corresponding to the B fifth sub-configurations is less than or equal to the quantity P of available CPUs, and priorities corresponding to the B fifth sub-configurations are higher than priorities corresponding to the M-B sixth sub-configurations, the quantity P of available CSI processing units CPUs corresponds to a first time unit, P is a positive integer, the first time unit is a time unit used to start processing CSI computation corresponding to M sub-configurations indicated by the first configuration information, M is a positive integer less than or equal to L, and B is an integer less than or equal to M.

With reference to the twenty-third aspect, in some implementations of the twenty-third aspect, the first reference signal resource is further located in a first time segment, and the first time segment is a discontinuous reception DRX active time segment of a terminal device.

With reference to the twenty-third aspect, in some implementations of the twenty-third aspect, the first configuration information indicates any one of reconfiguration, serving cell activation, bandwidth part BWP switching, and semi-persistent CSI activation.

With reference to the twenty-third aspect, in some implementations of the twenty-third aspect, the M first time domain resources are determined based on the first configuration information, the M first time domain resources are in one-to-one correspondence with the M sub-configurations, and a time domain location of the first time domain resource is determined based on a reference signal resource indicated by a sub-configuration corresponding to the first time domain resource.

With reference to the twenty-third aspect, in some implementations of the twenty-third aspect, one first time domain resource is determined based on the first configuration information, and a time domain location of the first time domain resource is determined based on a reference signal resource indicated by the L sub-configurations.

It should be understood that the M sub-configurations are sub-configurations that are of the L sub-configurations and that are triggered by a network device.

With reference to the twenty-third aspect, in some implementations of the twenty-third aspect, the second time domain resource and a last reference signal resource in time domain indicated by a corresponding sub-configuration are spaced apart by a first value, and the first value is CSI computation time.

With reference to the twenty-third aspect, in some implementations of the twenty-third aspect, quantities of CPUs corresponding to the M sub-configurations are determined based on a quantity of reference signal resources indicated by each sub-configuration.

With reference to the twenty-third aspect, in some implementations of the twenty-third aspect, priorities corresponding to the M sub-configurations are determined based on an index corresponding to each sub-configuration.

Optionally, a sum of quantities of CPUs corresponding to the B fourth sub-configurations and a quantity of CPUs corresponding to any fifth sub-configuration is greater than a quantity P of available CPUs.

According to a twenty-fourth aspect, a CSI transmission apparatus is provided. The apparatus includes: an interface unit, configured to: send first configuration information, where the first configuration information indicates L sub-configurations, each of the L sub-configurations indicates at least one reference signal resource in a reference signal resource set, and L is a positive integer; and receive a first CSI report when a reference signal resource indicated by any sub-configuration of the M sub-configurations includes at least one reference signal resource that is not later than a first time domain resource corresponding to the any sub-configuration in time domain, where the first CSI report includes M pieces of first CSI, the M pieces of first CSI are determined based on the M sub-configurations, the M first time domain resources are in one-to-one correspondence with M sub-configurations, the M sub-configurations belong to the L sub-configurations, and M is a positive integer less than or equal to L.

With reference to the twenty-fourth aspect, in some implementations of the twenty-fourth aspect, when at least one reference signal resource indicated by any sub-configuration includes at least one reference signal resource that is earlier than a first time domain resource corresponding to the any sub-configuration in time domain and is further located in a first time segment, the first time segment is a discontinuous reception DRX active time segment of a terminal device.

With reference to the twenty-fourth aspect, in some implementations of the twenty-fourth aspect, the first configuration information indicates any one of reconfiguration, serving cell activation, bandwidth part BWP switching, and semi-persistent CSI activation.

With reference to the twenty-fourth aspect, in some implementations of the twenty-fourth aspect, the time domain location of the first time domain resource is determined based on the first configuration information.

It should be understood that the M sub-configurations are sub-configurations that are of the L sub-configurations and that are triggered by a network device.

According to a twenty-fifth aspect, a CSI transmission apparatus is provided. The apparatus may be a terminal device, may be a component (for example, a processor, a chip, or a chip system) of a terminal device, or may be a logical node, a logical module, or software that can implement all or a part of functions of a terminal device. The apparatus has functions of implementing the first aspect to the sixth aspect, and the various possible implementations of the first aspect to the sixth aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute the program and the instructions stored in the storage unit, or instructions from another source, so that the apparatus performs the communication method according to the second aspect and the possible implementations of the second aspect or according to the fourth aspect and the possible implementations of the fourth aspect. In this design, the apparatus may be the terminal device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, so that a chip in the network device performs the communication method in the first aspect to the sixth aspect, and the various possible implementations of the first aspect to the sixth aspect. Optionally, the processing unit may execute instructions in a storage unit. The storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the first aspect to the sixth aspect.

According to a twenty-sixth aspect, a CSI transmission apparatus is provided. The apparatus may be a network device, may be a component (for example, a processor, a chip, or a chip system) of a network device, or may be a logical node, a logical module, or software that can implement all or a part of functions of a network device. The apparatus has functions of implementing the seventh aspect to the fourteenth aspect, and the various possible implementations of the seventh aspect to the twelfth aspect. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute the program and the instructions stored in the storage unit, or instructions from another source, so that the apparatus performs the communication method according to the seventh aspect to the twelfth aspect, and the various possible implementations of the seventh aspect to the twelfth aspect. In this design, the apparatus may be the network device.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, so that a chip in the network device performs the communication method according to the seventh aspect to the twelfth aspect, and the various possible implementations of the seventh aspect to the twelfth aspect. Optionally, the processing unit may execute instructions in a storage unit. The storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

Any processor described above may be a general-purpose central processing unit (CPU), a microprocessor, an application-specific integrated circuit (application-specific integrated circuit, ASIC), or one or more integrated circuits configured to control program execution of the communication method according to the seventh aspect to the twelfth aspect.

According to a twenty-seventh aspect, a communication system is provided. The communication system includes the communication device provided in the thirteenth aspect to the eighteenth aspect and the communication apparatus provided in the thirteenth aspect to the eighteenth aspect. The communication system may perform the data transmission method provided in any possible implementation of the first aspect to the sixth aspect or the seventh aspect to the twelfth aspect.

According to a twenty-eighth aspect, a computer-readable storage medium is provided. The computer-readable storage medium stores a computer program. When the computer program is run on a computer, the computer is enabled to execute instructions of the method according to the first aspect to the twelfth aspect or any possible implementation of the first aspect to the twelfth aspect.

According to a twenty-ninth aspect, a chip is provided. The chip includes a processing unit. The processing unit may execute instructions to perform the method according to the first aspect to the twelfth aspect or any possible implementation of the first aspect to the twelfth aspect.

According to a thirtieth aspect, a computer program product is provided. The product includes computer program code. When the computer program code is run, instructions of the method according to the first aspect to the twelfth aspect or any possible implementation of the first aspect to the twelfth aspect are executed.

According to a thirty-first aspect, a chip system is provided. The chip system includes a memory and a processor. The memory is configured to store instructions. The processor is configured to invoke the instructions from the memory and run the instructions to perform the method according to the first aspect to the twelfth aspect or the possible implementations of the first aspect to the twelfth aspect.

The chip system may include an input circuit or interface configured to send information or data, and an output circuit or interface configured to receive information or data.

Specifically, for beneficial effects of other aspects, refer to the beneficial effects described in the first aspect to the fourth aspect.

## BRIEF DESCRIPTION OF DRAWINGS

FIG. 1 is a diagram of a possible system applicable to an embodiment of this application;
FIG. 2 is a diagram of a possible correspondence between a sub-configuration and a resource set;
FIG. 3 is a diagram of a possible CSI reference resource;
FIG. 4 is a diagram of possible CSI reporting;
FIG. 5 is a diagram of possible CSI computation time;
FIG. 6 is a diagram of possible CSI update;
FIG. 7 is a diagram of a CSI transmission method according to an embodiment of this application;
FIG. 8 is a diagram of a CSI reference resource according to an embodiment of this application;
FIG. 9 is a diagram of another CSI reference resource according to an embodiment of this application;
FIG. 10 is a diagram of another CSI transmission method according to an embodiment of this application;
FIG. 11 is a diagram of CSI computation according to an embodiment of this application;
FIG. 12 to FIG. 15 are diagrams of other CSI transmission methods according to embodiments of this application; and
FIG. 16 to FIG. 18 are schematic block diagrams of several communication apparatuses according to this application.

## DESCRIPTION OF EMBODIMENTS

The following describes technical solutions of this application with reference to accompanying drawings.

The technical solutions in embodiments of this application may be applied to various communication systems, for example: a global system for mobile communication (global system for mobile communications, GSM); a code division multiple access (code division multiple access, CDMA) system; a wideband code division multiple access (wideband code division multiple access, WCDMA) system; a general packet radio service (general packet radio service, GPRS); an LTE system; an LTE frequency division duplex (frequency division duplex, FDD) system; LTE time division duplex (time division duplex, TDD); a universal mobile telecommunications system (universal mobile telecommunications system, UMTS); a worldwide interoperability for microwave access (worldwide interoperability for microwave access, WiMAX) communication system; a 5th generation (5th generation, 5G) system or an evolved communication system such as new radio (new radio, NR); vehicle-to-everything (vehicle-to-X, V2X), where V2X may include vehicle-to-network (vehicle-to-network, V2N), vehicle-to-vehicle (vehicle-to-vehicle, V2V), vehicle-to-infrastructure (vehicle-to-infrastructure, V2I), vehicle-to-pedestrian (vehicle-to-pedestrian, V2P), and the like; long term evolution-vehicle (long term evolution-vehicle, LTE-V); an internet of vehicles; machine type communication (machine type communication, MTC); an internet of things (internet of things, IoT); long term evolution-machine (long term evolution-machine, LTE-M); machine to machine (machine to machine, M2M); and device-to-device (device-to-device, D2D).

A terminal device in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in an evolved public land mobile network (public land mobile network, PLMN), or the like. This is not limited in embodiments of this application. For example, the terminal device may be a vehicle-mounted device, an entire vehicle device, a vehicle-mounted module, a vehicle, an on board unit (on board unit, OBU), a roadside unit (roadside unit, RSU), a vehicle-mounted communication unit (telematics box, T-box), a chip, or a system on chip (system on chip, SoC). The chip or the SoC may be installed in a vehicle, an OBU, an RSU, or a T-box.

The terminal device in embodiments of this application further includes at least any one of: user equipment; an augmented reality AR/virtual reality VR/extended reality XR device; a wearable device; a smart appliance terminal; a terminal device and a communication module of the terminal device; a mobile phone and a communication module in the mobile phone; a vehicle and a communication module in the vehicle; an information processing device; a display device; a network apparatus; a base station; a TRP; customer premises equipment (customer premises equipment, CPE); a router; a network access device; and the like. In terms of Uu (UTRAN-to-terminal device) air interface transmission, both parties of wireless communication include a network apparatus and a user communication device. In terms of SL air interface transmission, a receiving end and a transmitting end of wireless communication are both user communication devices. The network apparatus may be a conventional macro base station eNB in a conventional UMTS/LTE wireless communication system, may be a micro base station eNB in a heterogeneous network (heterogeneous network, HetNet) scenario, may be a baseband processing unit (baseband unit, BBU) and a remote radio unit (remote radio unit, RRU) in a distributed base station scenario, may be a baseband pool BBU pool and a radio frequency unit RRU in a CRAN scenario, or may be a gNB in a wireless communication system.

In embodiments of this application, a network device may be any device having a wireless transceiver function. The device includes, but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or home NodeB, HNB), a baseband unit (baseband unit, BBU), an access point (access point, AP), a wireless relay node, a wireless backhaul node, a transmission point (transmission point, TP), a transmission and reception point (transmission and reception point, TRP), or the like in a wireless fidelity (wireless fidelity, Wi-Fi) system, may be 5G, for example, NR, a gNB in a system, or a transmission point (TRP or TP), or one antenna panel or one group of antenna panels (including a plurality of antenna panels) of a base station in a 5G system, or may be a network node that forms a gNB or a transmission point, for example, a baseband unit (BBU), a distributed unit (distributed unit, DU), or the like.

In some deployments, a gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and a service, and implements functions of radio resource control (radio resource control, RRC) and a packet data convergence protocol (packet data convergence protocol, PDCP) layer. The DU is responsible for processing a physical layer protocol and a real-time service, and implementing functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

The network device serves a cell, and a terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), or the like. These small cells have characteristics of small coverage and low transmit power, and are applicable to providing a high-rate data transmission service.

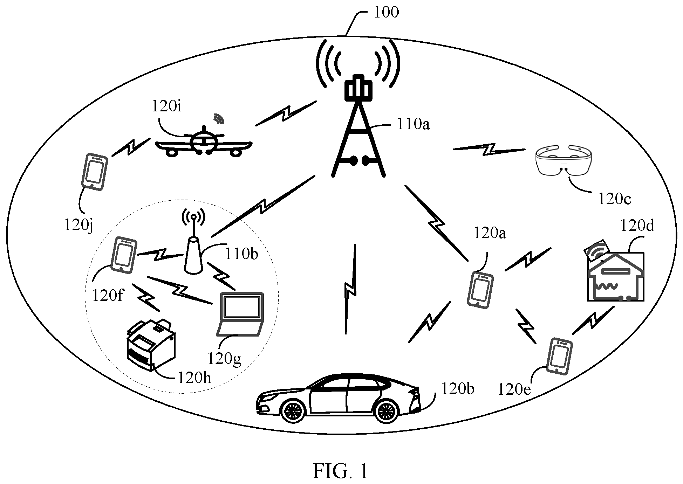

FIG. 1 is a diagram of a possible non-limiting system applicable to an embodiment of this application.

As shown in FIG. 1, the communication system includes a radio access network (radio access network, RAN) 100. The RAN 100 includes at least one RAN node (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to a core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to the 3rd generation partnership project (3rd generation partnership project, 3GPP), for example, a 4G mobile communication system, a 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be sometimes referred to as an access network device, a network device, a RAN entity, an access node, or the like, and forms a part of the communication system, to help the terminal implement radio access. A plurality of RAN nodes 110 in the communication system may be nodes of a same type, or may be nodes of different types. In some scenarios, roles of the RAN node 110 and the terminal 120 are relative. For example, the network element 120i in FIG. 1 may be a helicopter or an uncrewed aerial vehicle, and may be configured as a mobile base station. For the terminal 120j that accesses the RAN 100 via the network element 120i, the network element 120i is a base station. However, for the base station 110a, the network element 120i is a terminal. Sometimes, the RAN node 110 and the terminal 120 are both referred to as communication apparatuses. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved base station (evolved NodeB, eNodeB), an access point (access point, AP), a transmission reception point (transmission reception point, TRP), a next generation base station (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or a part of functions of the RAN node in this application may alternatively be implemented by using a software function running on hardware, or may be implemented by using a virtualization function instantiated on a platform (for example, a cloud platform). Alternatively, the RAN node in this application may be a logical node, a logical module, or software that can implement all or a part of functions of the RAN node.

In another possible scenario, the plurality of RAN nodes cooperate to assist the terminal in implementing radio access, and different RAN nodes separately implement a part of functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The RAN node may alternatively be described differently. Unless otherwise specified, in this application, the RAN node is described by using a network device.

It should be understood that FIG. 1 is merely a diagram, and another device that is not shown may be further included. In addition, a quantity of terminal devices and a quantity of network devices included in the communication system are not limited in embodiments of this application.

In embodiments of this application, the terminal device or the network device includes a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of the method provided in this application is not particularly limited in this application, provided that communication can be performed according to the method provided in embodiments of this application by running a program that records code of the method provided in this application. For example, the method provided in embodiments of this application may be executed by a terminal device or a network device, or a functional module that is in the terminal device or the network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable storage medium may include, but is not limited to, a magnetic storage device (for example, a hard disk drive, a floppy disk, or a magnetic tape), an optical disc (for example, a compact disc (compact disc, CD), a digital versatile disc (digital versatile disc, DVD), or the like), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain and/or carry an instruction and/or data.

In this application, "sending information to... (a terminal)" may be understood as that a destination of the information is the terminal, and may include directly or indirectly sending the information to the terminal. "Receiving information from... (a terminal)" may be understood as that a source of the information is the terminal, and may include directly or indirectly receiving the information from the terminal. Information may undergo necessary processing between a source and a destination for sending of the information, for example, a format change. However, the destination may understand valid information from the source. A similar expression in this application may be understood similarly, and details are not described herein again.

For ease of understanding of embodiments of this application, concepts and technologies used in embodiments of this application are first briefly described.

It should be understood that related terms and descriptions below are applicable to all embodiments in this specification. Different embodiments may be used independently, or may be used in combination based on some internal or external relationships. Different implementations in embodiments may be used independently or in combination.

1. Transmit channel (transmitter, TX)

A radio frequency (radio frequency, RF) transmit channel is referred to as a transmit channel for short. A single transmit channel corresponds to a single physical antenna port. The transmit channel may receive a baseband signal from a baseband chip, perform radio frequency processing (such as up-conversion, amplification, and filtering) on the baseband signal to obtain a radio frequency signal, and finally radiate the radio frequency signal into space through an antenna. Specifically, the transmit channel may include one or more of electronic components such as an antenna switch, an antenna tuner, a power amplifier (power amplifier, PA), a mixer (mixer), a local oscillator (local oscillator, LO), and a filter (filter). These electronic components may be integrated into one or more chips as required. The antenna may also be considered as a part of the transmit channel sometimes. In embodiments of this application, antenna disabling may also be referred to as transmit channel disabling.

2. Antenna port (port)

The antenna port may also be referred to as a port for short. Unless otherwise specified, the antenna port in embodiments of this application is a logical antenna port instead of a physical antenna port. One antenna port may be associated with one or more transmit channels. A signal on each antenna port is transmitted through one or more transmit channels associated with the antenna port. When one antenna port is associated with a plurality of transmit channels, a signal on the antenna port is weighted by using a weighting coefficient, and then is transmitted through the plurality of transmit channels associated with the antenna port. It may also be understood that a plurality of physical antennas form one logical antenna after being weighted by using the weighting coefficient. The weighting coefficient herein may be a complex number or a real number, and weighting coefficients on different physical antennas may be the same or different. Each antenna port corresponds to a time-frequency resource and a reference signal. Time-frequency resources corresponding to different antenna ports may be the same or different. A reference signal transmitted by a base station through an antenna port A may be used by a terminal to estimate a feature of a wireless channel from the antenna port A to the terminal. The feature of the wireless channel may be used by the terminal to estimate a physical channel transmitted through the antenna port A, or may be used to determine information such as a modulation order and a bit rate during data transmission. One reference signal may correspond to one or more antenna ports, or it may be understood that one reference signal may be transmitted through one or more antenna ports.

Antenna disabling may be classified into two types. Type 1: Antenna disabling affects (logical) antenna ports. When antenna disabling occurs, a quantity of antenna ports of a CSI-RS changes. Type 2: Antenna disabling does not affect (logical) antenna ports. When antenna disabling occurs, a quantity of antenna ports of a CSI-RS does not change.

3. Channel state information CSI

In a process in which a wireless signal arrives at a receiver from a transmitter over a wireless channel, fading may occur due to scattering, reflection, and energy attenuation with a distance. In addition, the wireless signal may be interfered by another signal at the receiver, affecting reception of the wireless signal. Characteristics such as attenuation and interference of a signal may be represented by using channel state information CSI. Specifically, the CSI may include at least one of a channel quality indicator (channel quality indicator, CQI), a precoding matrix indicator (precoding matrix indicator, PMI), a rank indicator (rank indicator, RI), a reference signal received power (reference signal received power, RSRP), and a signal to interference plus noise ratio (signal to interference plus noise ratio, SINR). These pieces of CSI may be sent by the terminal device to the network device through a physical uplink control channel (physical uplink control channel, PUCCH) or a physical uplink shared channel (physical uplink shared channel, PUSCH). In embodiments of this application, if there is no logical conflict, the terms "CQI" and "CQI index" may be interchanged, and the terms "report", "feed back", and "send" may be interchanged.

4. Reference signal

A reference signal is a known signal provided by a transmitting end for a receiving end for channel estimation or channel sounding. In embodiments of this application, the reference signal may be used for channel measurement, interference measurement, and the like, for example, measurement for a CSI-related parameter.

5. Reference signal resource

The reference signal resource may specifically include at least one of resources of a reference signal, for example, a time-frequency resource, an antenna port, a power resource, and a scrambling code. The network device may send the reference signal based on the reference signal resource, and the terminal device may receive the reference signal based on the reference signal resource. In embodiments of this application, one or more antenna ports corresponding to the reference signal resource may also be understood as one or more antenna ports included in the reference signal resource.

Specifically, the reference signal in embodiments of this application may be a channel state information-reference signal (channel state information-reference signal, CSI-RS) or an SSB. Correspondingly, the reference signal resource may be a CSI-RS resource or an SSB resource.

6. Discontinuous reception (discontinuous reception, DRX)

When a terminal device in a connected state is in a DRX working mode, the terminal device no longer continuously listens to a physical downlink control channel (physical downlink control channel, PDCCH), thereby achieving an objective of saving energy and prolonging a standby time. After the DRX mode is enabled, the terminal device has two states: an active state and a sleep state. When the terminal device is in the sleep state, the terminal device does not listen to some types of PDCCHs. For example, it is specified in an existing NR standard that a terminal device in a sleep time (that is, not in an active time) does not detect a PDCCH scrambled by a C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, an AI-RNTI, an SL-RNTI, or an SLCS-RNTI, and the terminal device does not receive or send a scheduling or activation signal of such a PDCCH. For example, a PDCCH scrambled by a C-RNTI may be used to schedule a PDSCH or a PUSCH, and the terminal device does not detect the PDCCH, that is, the terminal device does not receive or send the PDSCH or the PUSCH. However, in the active time, a behavior of detecting a PDCCH by the terminal device is not limited.

7. Multi-CSI reporting

The network device may configure at least one CSI report configuration for the terminal device by using higher layer signaling. Each CSI report configuration includes a CSI report configuration identifier (CSI report configuration ID) and the like. Currently, there are three types of CSI reporting manners supported in the new radio access technology NR: periodic CSI (periodic CSI, P-CSI) reporting, semi-persistent CSI (semi-persistent CSI, SP-CSI) reporting, and aperiodic CSI (aperiodic CSI, A-CSI) reporting.

Currently, one CSI report configuration may include L sub-configurations. For periodic CSI reporting, the network device reports CSI of the L sub-configurations. For semi-persistent CSI reporting and aperiodic CSI reporting, the network device may trigger the terminal device to send N pieces of CSI in one CSI report, where the N pieces of CSI correspond to N sub-configurations, and the N sub-configurations are included in the L sub-configurations.

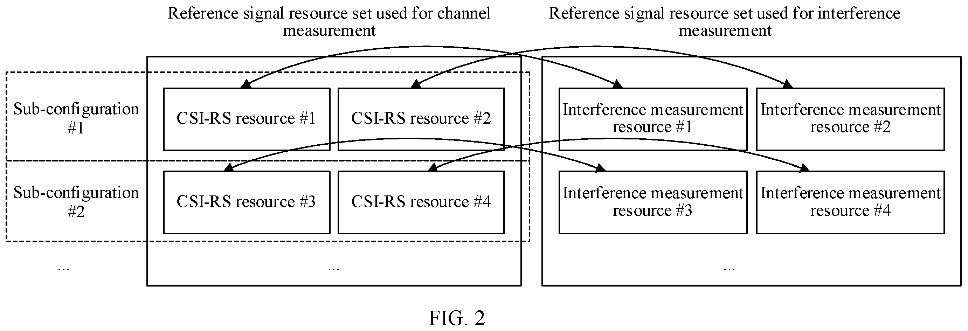

When the first type of antenna disabling is used, a sub-configuration includes a port subset indication and a codebook configuration. When the second type of antenna disabling is used, as shown in FIG. 2, a sub-configuration includes a resource set, where the resource set includes indexes of one or more CSI-RS resources.

8. CSI reference resource

The terminal device may determine a CSI reference resource. In time domain, the CSI reference resource is defined as a downlink slot $n-n_{CSI\_ref}$, and the slot n is a slot in which the terminal device reports a CSI report. The CSI reference resource is related to CSI reporting. In other words, each CSI reporting moment corresponds to one CSI reference resource. For example, for periodic CSI reporting or semi-persistent CSI reporting, CSI is periodically reported. Each reporting moment corresponds to one CSI reference resource. The network device may configure a periodic measurement resource for the terminal device. A measurement resource used by the terminal device for measurement is determined by using a CSI reference resource. The measurement resource corresponding to CSI reporting needs to be located before the CSI reference resource.

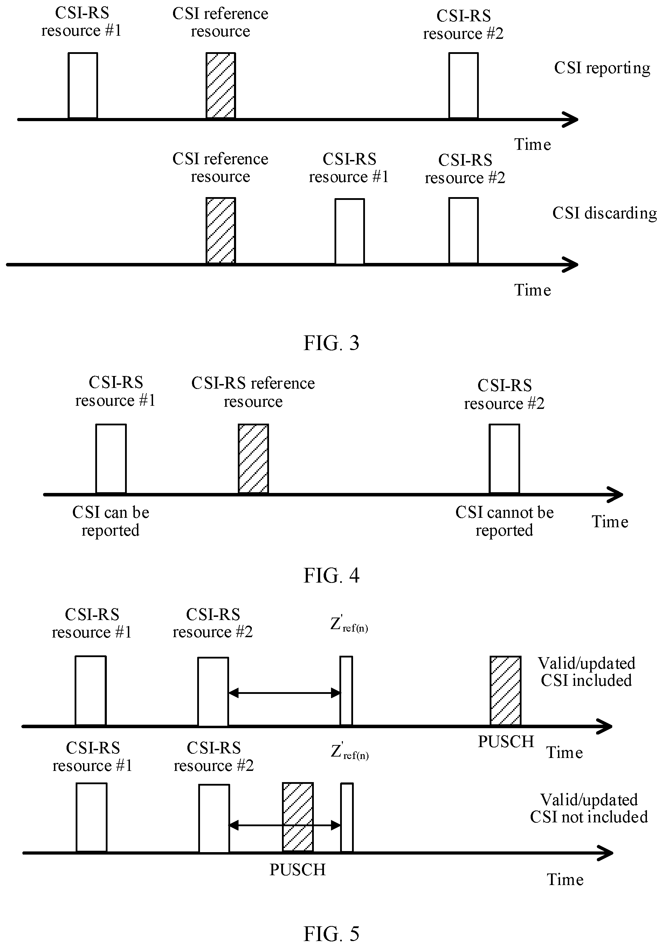

In a possible implementation, as shown in FIG. 3, after reconfiguration of a CSI report configuration, serving cell activation, BWP switching, or semi-persistent CSI activation, if at least one CSI-RS resource used for channel measurement and at least one CSI-RS resource used for interference measurement are not later than a CSI reference resource in time domain, the terminal device reports a CSI report. If all CSI-RS resources used for channel measurement and all CSI-RS resources used for interference measurement in time domain are later than a CSI reference resources, the terminal device discards the CSI report.

It should be understood that, as shown in FIG. 4, a sub-configuration 1 includes a CSI-RS resource 1, and a sub-configuration 2 includes a CSI-RS resource 2. After reconfiguration of a CSI report configuration, serving cell activation, BWP switching, or semi-persistent CSI activation, because the CSI-RS resource 1 included in the sub-configuration 1 is earlier than a CSI reference resource, and the CSI-RS resource 2 included in the sub-configuration 2 is later than the CSI reference resource, CSI of the sub-configuration 1 can be reported, and CSI of the sub-configuration 2 cannot be reported. However, if reporting and/or discarding is performed in a unit of a CSI report in the foregoing implementation, both the CSI of the sub-configuration 1 and the CSI of the sub-configuration 2 need to be reported. However, actually, the terminal device cannot complete reporting of the CSI of the sub-configuration 2. Consequently, the terminal device cannot work normally.

It should be noted that FIG. 3 and FIG. 4 show only diagrams of a CSI-RS resource used for channel measurement, but do not indicate a CSI-RS resource used for interference measurement. A specific location relationship should be subject to the foregoing description.

9. CSI computation time

If downlink control information (downlink control information, DCI) triggers N CSI reports on one PUSCH, the terminal device provides valid CSI for an $n^{th}$ triggered CSI report, and the following conditions need to be met:

An uplink symbol used to carry a CSI report is not earlier than a $Z_{ref}$ symbol; and an uplink symbol used to carry the $n^{th}$ CSI report is not earlier than a $Z'_{ref(n)}$ symbol.

$Z_{ref}$ is defined as a next uplink symbol after a time length $T_{proc,CSI}$ following the last symbol of the PDCCH used to trigger a CSI report, and $T_{proc,CSI} = (Z)(2048 + 144) \cdot \kappa 2^{-\mu} \cdot T_c$. $Z'_{ref(n)}$ is defined as a next uplink symbol after a time length $T'_{proc,CSI}$ following the last symbol of the CSI resource, and $T'_{proc,CSI} = (Z')(2048 + 144) \cdot \kappa 2^{-\mu} \cdot T_c$. When an aperiodic CSI-RS is used for channel measurement of the $n^{th}$ triggered CSI report, the CSI resource is the latest one of the CSI-RS used for channel measurement, the CSI-IM used for interference measurement, and the aperiodic CSI-RS used for interference measurement. $T_{proc,CSI}$ is CSI computation time corresponding to the N CSI reports, and $T'_{proc,CSI}$ is CSI computation time of the $n^{th}$ CSI report.

In a possible implementation, as shown in FIG. 5, when DCI triggers N CSI reports, if a first uplink symbol carrying an $n^{th}$ CSI report is earlier than a symbol $Z'_{ref(n)}$, a quantity of triggered reporting is 1 (that is, N=1), and no HARQ-ACK or transport block is multiplexed on a PUSCH, the terminal device ignores the DCI; otherwise, the terminal device does not update CSI of the $n^{th}$ triggered CSI report.

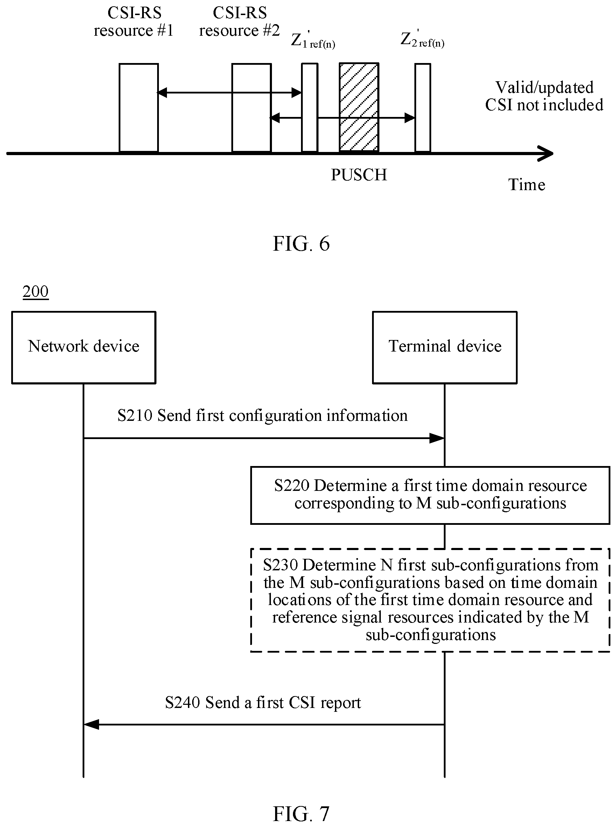

It should be understood that, as shown in FIG. 6, a sub-configuration 1 includes a CSI-RS resource 1, a sub-configuration 2 includes a CSI-RS resource 2, and the CSI-RS resource 1 and the CSI-RS resource 2 are used for channel measurement. The CSI-RS resource 1 is a last resource in time domain of a reference signal resource used for interference measurement and a reference signal resource used for channel measurement that correspond to the sub-configuration 1. The CSI-RS resource 2 is a last resource in time domain of a reference signal resource used for interference measurement and a reference signal resource used for channel measurement that correspond to the sub-configuration 2. If the sub-configuration 1 and the sub-configuration 2 correspond to the same $Z_2$'$_{ref(n)}$ in the foregoing implementation, the reporting resource PUSCH is earlier than the time point, and the terminal device does not update the two pieces of CSI. However, actually, $Z_1$'$_{ref(n)}$ corresponding to the sub-configuration 1 should be earlier, and the reporting resource PUSCH is later than $Z$'$_{ref(n)}$ of the sub-configuration 1. Therefore, CSI of the sub-configuration 1 can be updated. Consequently, some pieces of CSI that meet a condition cannot be updated in the foregoing implementation, and CSI reporting performance is affected.

10. CSI processing unit (CSI processing unit, CPU)

When a terminal performs CSI measurement, a specific computing or storage resource needs to be occupied. In the 3GPP protocol, a quantity of CPUs is used to represent a resource that needs to be occupied by the terminal device to process CSI. The terminal device reports, to the network device, a quantity of CPUs that can be supported by the terminal device, that is, a maximum CPU quantity $N_{CPU}$. For example, a terminal device 1 notifies the network device that a maximum quantity of CPUs supported by the terminal device is 10; and a terminal device 2 notifies the network device that a maximum quantity of CPUs supported by the terminal device is 15. The maximum quantity of CPUs supported is a quantity of CPUs simultaneously supported, and may be a quantity of CPUs simultaneously supported by one carrier, or a quantity of CPUs simultaneously supported by all carriers. For example, that a terminal device supports only one CPU only indicates that at a same moment, the terminal device has only one CPU for CSI processing.

In a possible implementation, on one OFDM symbol, if CSI reporting occupies L CPUs, $N_{CPU}$-L CPUs are not occupied. If the terminal device starts to compute the N CSI reports on the OFDM symbol again, and a sum of a quantity of CPUs occupied by the computation of the N CSI reports and a quantity of L CPUs is greater than $N_{CPU}$, the terminal device does not need to update CSI of N-M CSI reports with lowest priorities, where M is a maximum integer that satisfies a formula $\sum_{n=0}^{M-1} O_{CPU}^{(n)} \leq N_{CPU} - L$.

It should be understood that, in the foregoing implementation, when the quantity of CPUs exceeds the capability of the terminal device, the terminal device does not update the CSI reports. However, the CPU of the terminal device may actually support update of some CSI in the CSI reports. Consequently, the capability of the terminal device is not fully utilized, and performance of the terminal device is wasted.

11. CSI report priority

When physical uplink resources occupied by two CSI reports overlap on at least one OFDM symbol and are transmitted on a same carrier, it indicates that the two CSI reports collide. When the terminal device is configured to send two CSI reports that collide, CSI of the two CSI reports may be multiplexed (multiplex) to another reporting resource (that is, not the foregoing uplink resources that overlap in time domain) for reporting. If a quantity of bits that can be carried by the reporting resource is less than a total quantity of bits of the CSI of the two CSI reports, the terminal device discards the two CSI reports in ascending order of priorities of the two CSI reports.

A priority of a CSI report may be obtained through computing by using the following corresponding formula:

$$Pri_{iCSI} = 2 \cdot N_{cells} \cdot M_s \cdot y + N_{cells} \cdot M_s \cdot k + M_s \cdot c + \text{s.}$$

A value of y is determined by a type of the CSI report. For a periodic CSI report carried by a PUSCH, y=0; for a semi-persistent CSI report carried by a PUSCH, y=1; for a semi-persistent CSI report carried by a PUCCH, y=2; and for a periodic CSI report carried by a PUCCH, y=3. A value of k is related to content of the CSI report. If the CSI report includes L1-RSRP or L1-SINR, k=0; if the CSI report does not include L1-RSRP or L1-SINR, k=1. c is an index value of a serving cell, $N_{cells}$ is a higher layer parameter, and a maximum quantity of serving cells is *maxNrofservingCells*; s is a configuration identifier of the CSI report, $M_s$ is a higher layer parameter, and a maximum quantity of CSI report configurations is *maxNrofCSI-ReportConfigurations.*

If the value $Pri_{iCSI}$ associated with the first report is lower than that associated with the second report, the priority of the first CSI report is considered lower than the priority of the second CSI report.

A CSI report may be divided into two parts: a part 1 and a part 2. The part 1 includes a rank indicator (rank indicator, RI), a resource indicator (CSI-RS resource indicator, CRI), and a CQI of a first codebook. The part 2 includes a wideband CQI, a wideband LI, a wideband PMI, and sub-band CSI of a second codebook when the RI is greater than 4. The priority of the part 1 is higher than that of the part 2. The priority of the part 1 complies with a priority of the CSI report. Priorities of the part 2 of the CSI are as follows: wideband part 2 CSI of two CSI reports has a highest priority, followed by sub-band CSI of an odd-numbered sub-band of a CSI report with a higher priority, sub-band CSI of an even-numbered sub-band of a CSI report with a higher priority, sub-band CSI of an odd-numbered sub-band of a CSI report with a lower priority, sub-band CSI of an even-numbered sub-band of a lower priority, and the rest can be deduced by analogy.

In a possible implementation, after the CSI reports collide in time domain, the CSI reports are discarded based on priorities of the two CSI reports and different parts of the CSI reports.

It should be understood that, after the CSI reports collide in time domain, if a configuration of one CSI report includes a plurality of sub-configurations, according to the foregoing discarding rule, a plurality of pieces of CSI corresponding to the plurality of sub-configurations are uniformly discarded. As a result, reporting resources are not fully utilized, and the network device cannot obtain more CSI information due to discarding, affecting performance.

Based on the foregoing implementation, a behavior of discarding and/or updating a CSI report is performed in a unit of a CSI report, and a problem is caused when one CSI report includes a plurality of pieces of CSI. This application provides a CSI transmission method where in a unit of a sub-configuration, discarding or update is performed by using a related rule for a reference resource, computation time, or a CSI processing unit corresponding to each sub-configuration, so that normal CSI reporting of the terminal device is ensured, and CSI reporting resources and computational capabilities can be fully utilized.

It may be understood that in a diagram of the method in this application, an example in which the network device and the terminal device are execution bodies of interaction illustration is used to illustrate the method. However, an execution body of the interaction illustration are not limited in this application. For example, the network device in the figure may alternatively be a module (for example, a chip, a chip system, or a processor) used in the network device, or may be a logical node, a logical module, or software that can implement all or a part of functions of the network device. The terminal device in the figure may alternatively be a module (for example, a chip, a chip system, or a processor) used in the terminal device, or may be a logical node, a logical module, or software that can implement all or a part of functions of the terminal device.

In the accompanying drawings provided in this application, the dashed box indicates that the step is a step that may be implemented in the method, or may be an optional step that is implemented in another step. Details are not described below again.

FIG. 7 is a diagram of a CSI transmission method 200 according to an embodiment of this application. As shown in FIG. 7, the method 200 includes at least the following steps.

S210. A network device sends first configuration information, and correspondingly, a terminal device receives the first configuration information.

The first configuration information may be a CSI report configuration.

A first CSI report configuration indicates L sub-configurations, each of the L sub-configurations indicates at least one CSI-RS resource in a reference signal resource set, the CSI-RS resources indicated by the L sub-configurations are included in the reference resource set, and a reference signal resource is used for channel measurement. Each of the L sub-configurations indicates at least one CSI-RS resource in the reference signal resource set, and the at least one CSI-RS resource may be a part of CSI-RS resources in the reference signal resource set. For example, the reference signal resource set includes a CSI-RS resource 1 and a CSI-RS resource 2. There are L=2 sub-configurations, numbered as a sub-configuration 1 and a sub-configuration 2, the sub-configuration 1 indicates the CSI-RS resource 1, and the sub-configuration 2 indicates the CSI-RS resource 2.

Each of the L sub-configurations further indicates at least one second reference signal resource in a second reference signal resource set. The second reference signal resource is used for interference measurement, and may be directly indicated or may be indirectly indicated. The indirect indication manner may be: a sub-configuration indicates at least one CSI-RS resource used for channel measurement, and each CSI-RS resource in the at least one CSI-RS resource is associated with one reference signal resource used for interference measurement. The association manner may be predefined. For example, two types of resources are associated one by one based on an index sequence.

The first configuration information may further include a common configuration, and the common configuration includes at least one of configuration information of a CQI table, configuration information of a CSI reporting amount, and codebook configuration information. The common configuration may be a common configuration corresponding to the L sub-configurations. It may be understood that in the following step S240, N pieces of first CSI are determined based on N first sub-configurations, that is, the N pieces of first CSI are determined based on the N first sub-configurations and some information included in a common configuration corresponding to the N sub-configurations, and each piece of first CSI is determined based on one first sub-configuration and the common configuration. The common configuration corresponding to the L sub-configurations may also include other configuration information. The other configuration information may be used to determine the N pieces of first CSI, or may not be used to determine the N pieces of first CSI. For example, the other configuration information may be used to transmit the N pieces of first CSI. This is not limited in this application.

For example, as shown in FIG. 2, a sub-configuration may include an index of a CSI-RS resource, that is, the CSI-RS resource is indicated in an index manner. A sub-configuration #1 includes indexes of a CSI-RS resource 1 and a CSI-RS resource 2, and a sub-configuration #2 includes indexes of a CSI-RS resource 3 and a CSI-RS resource 4. A CSI-RS resource used for channel measurement and an interference measurement resource used for interference measurement are sequentially associated in descending order of reference signal indexes.

It should be noted that, in this embodiment of this application, a sequence of reference signal resources in the reference signal resource set may be understood as a sequence in which identifiers/indexes of the reference signal resources appear in configuration information of the reference signal resource set.

S220. Determine, based on the first configuration information, a first time domain resource corresponding to M sub-configurations.

The M sub-configurations belong to the L sub-configurations, and M is a positive integer less than or equal to L.

It should be understood that, when a CSI report configuration is a periodic CSI report configuration, the M sub-configurations are the L sub-configurations (the L sub-configurations of the periodic CSI report configuration are reported L sub-configurations); or when a CSI report configuration is a semi-persistent CSI report configuration or an aperiodic CSI report configuration, the M sub-configurations are sub-configurations triggered by the network device in the L sub-configurations.

In a possible implementation, there may be M first time domain resources corresponding to the M sub-configurations, and the M first time domain resources are in one-to-one correspondence with the M sub-configurations. The first time domain resource may be a CSI reference resource. A CSI reference resource corresponding to any one of the M sub-configurations may be used to compute a CQI for the sub-configuration. Optionally, a time domain location of the first time domain resource is determined based on a reference signal resource indicated by a sub-configuration corresponding to the first time domain resource.

For example, when the CSI report configuration is periodic CSI reporting or semi-persistent CSI reporting, a CSI reference resource used for CSI reporting in an uplink slot n' is defined as a downlink slot $\text{n} - \text{n}_{CSI_{ref}} - K_{offset} \cdot \frac{2^{\mu_{DL}}}{2^{\mu_{K_{offset}}}}$ , where $K_{offset}$ is configured by using a higher layer parameter, $\mu_{K_{offset}}$ is a subcarrier spacing, n is determined based on n', and $n_{CSI_{ref}}$ is determined based on a quantity of CSI-RS resources included in a sub-configuration. When the quantity of CSI-RS resources included in the sub-configuration is 1, $n_{CSI_{ref}}$ is greater than or equal to $4 \cdot 2^{\mu_{DL}}$. When the quantity of CSI-RS resources included in the sub-configuration is greater than 1, $n_{CSI_{ref}}$ is greater than or equal to $5 \cdot 2^{\mu_{DL}}$.

In another possible implementation, there may be one first time domain resource corresponding to the M sub-configurations. The first time domain resource may be a CSI reference resource. The CSI reference resources corresponding to the M sub-configurations may be used to compute a CQI for each of the M sub-configurations. Optionally, a time domain location of the first time domain resource is determined based on a reference signal resource indicated by the M or L sub-configurations.

For example, if a slot in which CSI is reported is a slot n', and a time domain location of a CSI reference resource is n - $n_{CSI_{ref}}$ n is a reporting slot corresponding to a reporting moment n'. A computation formula is as follows: $\text{n} = \left\lfloor n' \frac{2^{\mu_{DL}}}{2^{\mu_{UL}}} \right\rfloor \cdot$ $\mu_{UL}$ and $\mu_{DL}$ correspond to an uplink subcarrier spacing and a downlink subcarrier spacing respectively. For a periodic CSI report and a semi-persistent CSI report, if a total of one CSI-RS/SSB resource is configured for M or L sub-configurations for channel measurement, $n_{CSI_{ref}}$ is greater than or equal to a minimum value of $4 \cdot 2^{\mu_{DL}}$; or if a total of a plurality of CSI-RS/SSB resources are configured for M or L sub-configurations for channel measurement, $n_{CSI_{ref}}$ is greater than or equal to a minimum value of $5 \cdot 2^{\mu_{DL}}$.

S240. The terminal device sends a first CSI report, and correspondingly, the network device receives the first CSI report.

The terminal device may send the first CSI report on a first CSI reporting resource. Configuration information of the first reporting resource may be included in the first configuration information, or may be indicated by other indication information. Specifically, when the first reporting resource is a physical uplink control channel PUCCH, the configuration information of the first reporting resource is PUCCH resource configuration information, and the PUCCH resource configuration information is included in the first configuration information. Specifically, when the first reporting resource is a physical uplink shared channel PUSCH, the configuration information of the first reporting resource is carried in downlink control information DCI. The configuration information of the first reporting resource may include time domain resource configuration information of the PUSCH and frequency domain resource configuration information of the PUSCH. The time domain resource control information of the PUSCH may be included in a time domain resource assignment (Time domain resource assignment, TDRA) field of the DCI. The frequency domain resource control information of the PUSCH may be included in a frequency domain resource assignment (Frequency domain resource assignment, FDRA) field of the DCI. The DCI may be DCI used to trigger the first CSI report.

The first CSI report includes N pieces of first CSI, the N pieces of first CSI are determined based on N first sub-configurations, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain, and N is a positive integer less than or equal to M. That the first reference signal resource is not later than the first time domain resource corresponding to the first sub-configuration in time domain may be replaced with that the first reference signal resource and the at least one reference signal resource used for interference measurement are not later than the first time domain resource corresponding to the first sub-configuration in time domain, and the reference signal resource used for interference measurement is indicated by the first sub-configuration.

It should be understood that, in this application, that CSI corresponds to a sub-configuration or a sub-configuration corresponds to CSI may be understood as that the CSI is obtained through measurement performed based on a CSI-RS resource indicated by the sub-configuration.

The first CSI report does not include M-N pieces of second CSI, the N pieces of CSI correspond to N first sub-configurations, the N first sub-configurations are included in the M sub-configurations, and the M-N pieces of second CSI correspond to M-N second sub-configurations (that is, sub-configurations other than the N first sub-configurations in the M sub-configurations) respectively. In other words, the terminal device discards the M-N pieces of second CSI, the M-N pieces of second CSI correspond to the M-N second sub-configurations, and a reference signal resource indicated by each second sub-configuration is later than the first time domain resource corresponding to the second sub-configuration in time domain. In other words, both the reference signal resource indicated by the second sub-configuration and the reference signal resource used for interference measurement are later than the first time domain resource corresponding to the first sub-configuration in time domain.

The first time domain resource may be a time domain resource of a CSI reference resource. After reconfiguration of a CSI report configuration, serving cell activation, BWP switching, or semi-persistent CSI activation, if a time domain resource of at least one CSI-RS resource (that is, first reference signal resource) in the CSI-RS resources included in the first sub-configuration is not later than the first time domain resource corresponding to the first sub-configuration, the CSI corresponding to the first sub-configuration is included in the CSI report; otherwise, the CSI corresponding to the first sub-configuration is not included in the first CSI report.

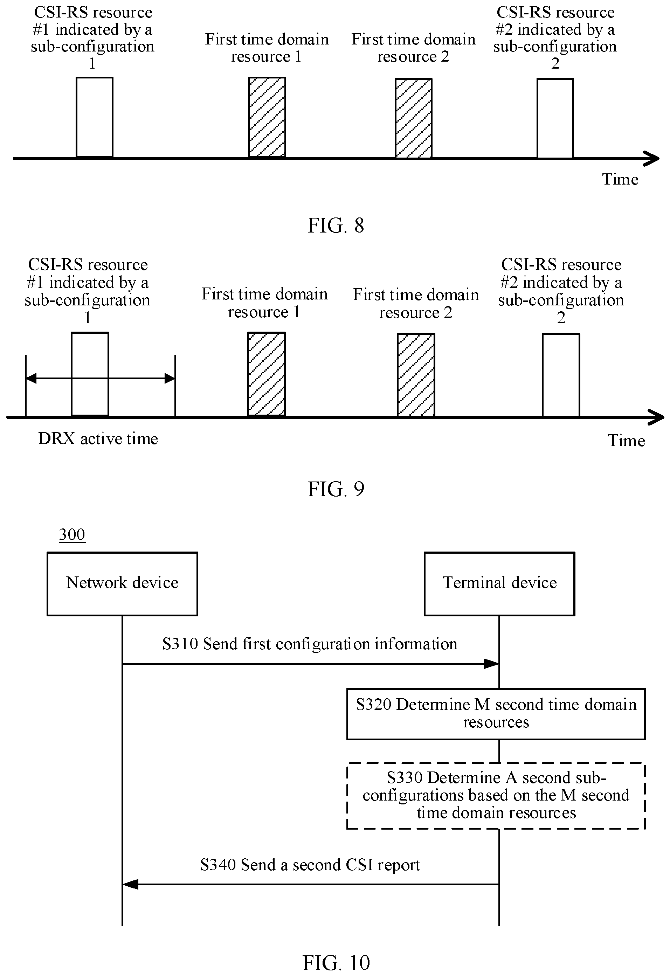

For example, as shown in FIG. 8, a sub-configuration 1 indicates a CSI-RS resource #1, a sub-configuration 2 indicates a CSI-RS resource #2, and the CSI-RS resource #1 and the CSI-RS resource #2 are used for channel measurement. The CSI-RS resource #1 is a resource of a reference signal resource used for interference measurement and a reference signal resource used for channel measurement that correspond to the sub-configuration #1. The CSI-RS resource 2 is a resource of a reference signal resource used for interference measurement and a reference signal resource used for channel measurement that correspond to the sub-configuration 2. The terminal device determines a first time domain resource 1 corresponding to the sub-configuration 1 and a first time domain resource 2 corresponding to the sub-configuration 2. Resources indicated by the sub-configuration 1 include the CSI-RS resource #1 (namely, the first reference signal resource) earlier than the first time domain resource 1 corresponding to the sub-configuration 1 in time domain. Therefore, the sub-configuration 1 is one of the N first sub-configurations, and has corresponding CSI included in a reported CSI report. Correspondingly, resources indicated by the sub-configuration 2 include no reference signal resource earlier than the first time domain resource 2 corresponding to the sub-configuration 2. Therefore, the sub-configuration 2 does not belong to the N first sub-configurations.

For another example, as shown in FIG. 8, a sub-configuration 1 indicates a CSI-RS resource #1, a sub-configuration 2 indicates a CSI-RS resource #2, and the CSI-RS resource #1 and the CSI-RS resource #2 are used for channel measurement. The CSI-RS resource #1 is a resource of a reference signal resource used for interference measurement and a reference signal resource used for channel measurement that correspond to the sub-configuration #1. The CSI-RS resource 2 is a resource of a reference signal resource used for interference measurement and a reference signal resource used for channel measurement that correspond to the sub-configuration 2. The terminal device determines one first time domain resource (which may be either of the first time domain resource 1 and the first time domain resource 2, and the first time domain resource 1 is used as an example herein) corresponding to the sub-configuration 1 and the sub-configuration 2. The resource indicated by the sub-configuration 1 includes the CSI-RS resource #1 (namely, the first reference signal resource) earlier than the first time domain resource 1 corresponding to the sub-configuration 1 in time domain. Therefore, the sub-configuration 1 is one of N first sub-configurations, and has corresponding CSI included in a reported CSI report. Correspondingly, resources indicated by the sub-configuration 2 include no reference signal resource earlier than the first time domain resource 1 corresponding to the sub-configuration 2. Therefore, the sub-configuration 1 does not belong to the N first sub-configurations.

In a possible implementation, the M pieces of CSI may include one piece of reference CSI, the reference CSI corresponds to one reference sub-configuration, the reference CSI may be one of the N pieces of first CSI, and the M-N pieces of second CSI do not include the reference CSI. The reference CSI includes first information, the first information includes at least one of a CRI, a PMI, and an RI, and CSI other than the reference CSI in the N pieces of first CSI may not include the first information. Further, the terminal device determines reference CSI in the M pieces of CSI, where the reference CSI is CSI corresponding to a reference sub-configuration, and the reference sub-configuration is a first sub-configuration that meets at least one of the following conditions in the N first sub-configurations: the reference sub-configuration is a sub-configuration that corresponds to a highest priority in the N first sub-configurations; the reference sub-configuration is a first sub-configuration that has a lowest sub-configuration index in the N first sub-configurations; and the reference sub-configuration is a sub-configuration with a largest port number of the CSI-RS resource in the N first sub-configurations. The reference sub-configuration is not included in the M-N second sub-configurations. When reporting the N pieces of first CSI, the terminal device may report the N pieces of first CSI in a compression manner. For example, one piece of uncompressed CSI and a plurality of pieces of compressed CSI are reported, where the uncompressed CSI includes the first information, and the compressed CSI does not include the first information. When the network device indicates the terminal device to report the M pieces of CSI, the terminal device needs to determine CSI which is not compressed. Because the terminal device determines, based on a relationship between the reference signal resource corresponding to the sub-configuration and the CSI reference resource, that the M-N pieces of second CSI in the M pieces of CSI are not reported, the terminal device needs to determine one piece of first CSI in the N pieces of first CSI that are actually reported as the reference CSI. For a method for determining the reference CSI by the terminal device, refer to the foregoing manner.

In a possible implementation, the first reference signal resource is further located in a first time segment, and the first time segment is a discontinuous reception DRX active time segment of a terminal device. The first CSI report includes N pieces of first CSI, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain and is located in the first time segment, and the first time segment is the DRX active time segment of the terminal device.

For example, as shown in FIG. 9, a sub-configuration 1 indicates a CSI-RS resource #1, a sub-configuration 2 indicates a CSI-RS resource #2, and the CSI-RS resource #1 and the CSI-RS resource #2 are used for channel measurement. The CSI-RS resource #1 is a resource of a reference signal resource used for interference measurement and a reference signal resource used for channel measurement that correspond to the sub-configuration #1. The CSI-RS resource 2 is a resource of a reference signal resource used for interference measurement and a reference signal resource used for channel measurement that correspond to the sub-configuration 2. The terminal device determines the first time domain resource 1 corresponding to the sub-configuration 1 and the first time domain resource 2 corresponding to the sub-configuration 2. If DRX is configured for the terminal device, resources indicated by the sub-configuration 1 include the CSI-RS resource #1 (namely, the first reference signal resource) earlier than the first time domain resource 1 corresponding to the sub-configuration 1 in time domain and are included in DRX active time (namely, a first time segment). Therefore, the sub-configuration 1 is one of the N first sub-configurations, and has corresponding CSI included in a reported CSI report.

In another possible implementation, when a reference signal resource indicated by any sub-configuration of the M sub-configurations includes at least one reference signal resource that is not later than a first time domain resource corresponding to the any sub-configuration in time domain, CSI corresponding to all the M sub-configurations is sent; and when the M sub-configurations include first sub-configurations, CSI corresponding to the M sub-configurations is discarded if a reference signal resource indicated by each of the first sub-configurations is later than a first time domain resource corresponding to the first sub-configuration in time domain. That is, when all the M pieces of CSI meet the condition, all the M pieces of CSI are reserved; and when one of the M pieces of CSI does not meet the condition, all the M pieces of CSI are discarded.

In another possible implementation, when a reference signal resource indicated by any sub-configuration of the M sub-configurations includes at least one reference signal resource that is not later than a first time domain resource corresponding to the any sub-configuration in time domain, and the at least one reference signal resource is located in a first time segment, CSI corresponding to all the M sub-configurations is sent, where the first time segment is a DRX active time segment of the terminal device; and when the M sub-configurations include first sub-configurations, CSI corresponding to the M sub-configurations is discarded if a reference signal resource indicated by each of the first sub-configurations is later than a first time domain resource corresponding to the first sub-configuration in time domain and/or is not located in the first time segment. That is, when all the M pieces of CSI meet the condition, all the M pieces of CSI are reserved; and when one of the M pieces of CSI does not meet the condition, all the M pieces of CSI are discarded.

Optionally, the terminal device may perform S230 to determine the N first sub-configurations from the M sub-configurations based on time domain locations of the first time domain resource and reference signal resources indicated by the M sub-configurations.

According to the solution of this application, when a CSI report includes a plurality of pieces of CSI, a related discarding or sending rule for a CSI reference resource of each sub-configuration is defined, to ensure normal CSI report reporting of the terminal device.

FIG. 10 is a diagram of another CSI transmission method 300 according to an embodiment of this application. As shown in FIG. 10, the method 300 includes at least the following steps.

S310. A network device sends first configuration information, and correspondingly, a terminal device receives the first configuration information.

The first configuration information indicates L sub-configurations, the first configuration information corresponds to a reference signal resource set, each of the L sub-configurations corresponds to at least one reference signal resource in the reference signal resource set, and L is a positive integer.

This step is similar to S210 in the method 200. For details, refer to the description in S210.

S320. Determine M second time domain resources.

The terminal device determines M second time domain resources based on a last reference signal resource in time domain indicated by each of M sub-configurations, where the M second time domain resources are in one-to-one correspondence with the M sub-configurations, and M is a positive integer less than or equal to L.

The M sub-configurations belong to the L sub-configurations.

It should be understood that, when a CSI report configuration is a periodic CSI report configuration, the M sub-configurations are the L sub-configurations; and when a CSI report configuration is a semi-persistent CSI report configuration or an aperiodic CSI report configuration, the M sub-configurations are sub-configurations triggered by the network device in the L sub-configurations.

In a possible implementation, the second time domain resource and a last reference signal resource in time domain indicated by a corresponding sub-configuration are spaced apart by a first value, and the first value is CSI computation time.

The first value may be preset or determined based on the first configuration information.

For example, the second time domain resource is a next uplink OFDM symbol of $T'_{proc,CSI} = (Z')(2048 + 144) \cdot \kappa 2^{-\mu} \cdot T_c$ after the last symbol of the last reference signal resource in time domain indicated by the sub-configuration corresponding to the second time domain resource. The last reference signal resource in time domain indicated by the sub-configuration may be a latest one of a CSI-RS resource for channel measurement, a CSI-RS resource for interference measurement, or a CSI-IM resource for interference measurement, that is, a last resource in time domain in the reference signal resource set and the second reference signal resource set.

In the foregoing example, the first value is $T'_{proc,CSI}$, and a computation formula of the first value may be preset or configured by using the first configuration information, and then computation is performed based on a related value configured in the first configuration information. In another embodiment, the first value may be determined by presetting, or may be directly indicated by the first configuration information.

S340. The terminal device sends a second CSI report, and correspondingly, the network device receives the second CSI report.

The second CSI report includes A pieces of third CSI, and the third CSI is updated based on A third sub-configurations; and the third CSI report further includes M-A pieces of non-updated fourth CSI, and the M-A pieces of fourth CSI correspond to M-A fourth sub-configurations.

A second time domain resource corresponding to the third sub-configuration is earlier than the first CSI reporting resource in time domain, the CSI reporting resource is indicated by the first configuration information, and A is a positive integer less than or equal to M.

In a possible implementation, M-A fourth sub-configurations are determined from the M sub-configurations based on the M second time domain resources, where the M-A fourth sub-configurations are sub-configurations other than the A third sub-configurations in the M sub-configurations, and a second time domain resource corresponding to the fourth sub-configuration is later than the first CSI reporting resource in time domain.

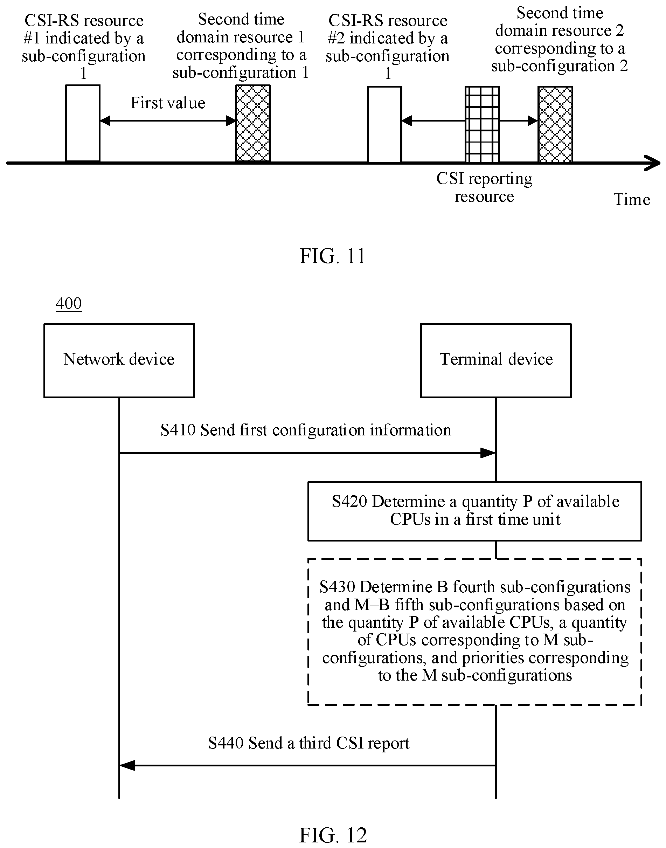

For example, as shown in FIG. 11, a sub-configuration 1 indicates a CSI-RS resource #1, a sub-configuration 2 indicates a CSI-RS resource #2, the CSI-RS resource #1 is the last one of reference signal resources indicated by the sub-configuration 1 in time domain, the CSI-RS resource #2 is the last one of reference signal resources indicated by the sub-configuration 2 in time domain, and the terminal device determines a second time domain resource 1 corresponding to the sub-configuration 1 and a second time domain resource 2 corresponding to the sub-configuration 2; and the CSI-RS resource #1 and the second time domain resource 1 are spaced apart at an interval of a first value in time domain, where the interval is CSI computation time. The second time domain resource 1 is earlier than the first CSI reporting resource in time domain. Therefore, the sub-configuration 1 is one of the A third sub-configurations. The second time domain resource 2 is later than the first CSI reporting resource in time domain. Therefore, the sub-configuration 2 is one of the M-A fourth sub-configurations. Therefore, the terminal device does not need to update the CSI corresponding to the sub-configuration 2.

In a possible implementation, the M pieces of CSI may include one piece of reference CSI, the reference CSI corresponds to one reference sub-configuration, the reference CSI may be one of the N pieces of first CSI, and the M-N pieces of second CSI do not include the reference CSI. The reference CSI includes first information, the first information includes at least one of a CRI, a PMI, and an RI, and CSI other than the reference CSI in the N pieces of first CSI may not include the first information. Further, the terminal device determines reference CSI in the M pieces of CSI, where the reference CSI is CSI corresponding to a reference sub-configuration, and the reference sub-configuration is a first sub-configuration that meets at least one of the following conditions in the N first sub-configurations: the reference sub-configuration is a sub-configuration that corresponds to a highest priority in the N first sub-configurations; the reference sub-configuration is a first sub-configuration that has a lowest sub-configuration index in the N first sub-configurations; and the reference sub-configuration is a sub-configuration with a largest port number of the CSI-RS resource in the N first sub-configurations. The reference sub-configuration is not included in the M-N second sub-configurations. When reporting the N pieces of first CSI, the terminal device may report the N pieces of first CSI in a compression manner. For example, one piece of uncompressed CSI and a plurality of pieces of compressed CSI are reported, where the uncompressed CSI includes the first information, and the compressed CSI does not include the first information. When the network device indicates the terminal device to report the M pieces of CSI, the terminal device needs to determine CSI which is not compressed. Because the terminal device determines, based on a relationship between the reference signal resource corresponding to the sub-configuration and the CSI reference resource, that the M-N pieces of second CSI in the M pieces of CSI are not reported, the terminal device needs to determine one piece of first CSI in the N pieces of first CSI that are actually reported as the reference CSI. For a method for determining the reference CSI by the terminal device, refer to the foregoing manner.

In another possible implementation, when the M second time domain resources corresponding to the M sub-configurations are all earlier than the first CSI reporting resource in time domain, the M sub-configurations are all third sub-configurations, that is, the M sub-configurations are all updated. When any one of the M second time domain resources corresponding to the M sub-configurations is later than the first CSI reporting resource in time domain, the CSI corresponding to the M sub-configurations is discarded.

Optionally, the terminal device may perform S330 to determine the A third sub-configurations from the M sub-configurations based on the M second time domain resources.

According to the solution of this application, when a CSI report includes a plurality of pieces of CSI, a related discarding or updating rule for CSI computation time of each sub-configuration is defined, so that CSI computational capabilities of the terminal device are fully utilized.

It may be understood that, for the terminal device, CSI computation involves various matrix operations, and both an operation amount and operation complexity are very high, to greatly affect chip costs and power consumption of the terminal device. In addition, CSI computation capabilities of terminal devices using chips with different capabilities are also different. Therefore, CSI needs to be discarded and updated based on a CSI processing capability. When a quantity of available CPUs is less than a quantity of CPUs corresponding to one CSI report, the terminal device does not update the CSI report, and the terminal device sends a non-updated CSI report on a time-frequency resource used to send a CSI report.

FIG. 12 is a diagram of another CSI transmission method 400 according to an embodiment of this application. As shown in FIG. 12, the method 400 includes at least the following steps.

S410. A network device sends first configuration information, and correspondingly, a terminal device receives the first configuration information.

The first configuration information indicates L sub-configurations, the first configuration information corresponds to a reference signal resource set, each of the L sub-configurations corresponds to at least one reference signal resource in the reference signal resource set, the reference signal resource is used for channel measurement, and L is a positive integer.

This step is similar to S210 in the method 200. For details, refer to the description in S210.

S420. Determine a quantity P of available CSI processing units CPUs in a first time unit.

On one OFDM symbol, if T CPUs are occupied, $N_{CPU}$-T CPUs are not occupied, that is, the quantity P of available CPUs is equal to $N_{CPU}$-T. $N_{CPU}$ is a maximum quantity of CPUs supported by the terminal device, and $N_{CPU}$ is reported by the terminal device.

S440. The terminal device sends a third CSI report, and correspondingly, the network device receives the third CSI report.

The third CSI report includes B pieces of fifth CSI and M-B pieces of sixth CSI, the B pieces of fifth CSI are updated based on B fifth sub-configurations, and the M-B pieces of sixth CSI correspond to M-B sixth sub-configurations.

The M sub-configurations belong to the L sub-configurations. It should be understood that, when a CSI report configuration is a periodic CSI report configuration, the M sub-configurations are the L sub-configurations; and when a CSI report configuration is a semi-persistent CSI report configuration or an aperiodic CSI report configuration, the M sub-configurations are sub-configurations triggered by the network device in the L sub-configurations.

A sum of quantities of CPUs corresponding to the B fifth sub-configurations is less than or equal to a quantity P of available CPUs, that is, B satisfies a formula: $\sum_{n=0}^{B-1} O_{CPU}^{(n)} \leq N_{CPU} - T$, where $O_{CPU}^{(n)}$ is a quantity of CPUs corresponding to an (n+1)th sub-configuration obtained by performing sorting based on priorities of the M sub-configurations, that is, $O_{CPU}^{(n)}$ is a quantity of CPUs required by the terminal for computing CSI of the (n+1)th sub-configuration obtained by performing sorting based on the priorities of the M sub-configurations.

Priorities corresponding to the B fifth sub-configurations are higher than priorities corresponding to the M-B sixth sub-configurations, M is a positive integer less than or equal to L, and B is an integer less than or equal to M.

It should be understood that a sum of the quantities of CPUs corresponding to the B fifth sub-configurations and a quantity of CPUs corresponding to any sixth sub-configuration is greater than the quantity P of available CPUs, that is, B is a maximum positive integer satisfying the formula: $\sum_{n=0}^{B-1} O_{CPU}^{(n)} \leq N_{CPU} - T$ , where $O_{CPU}^{(n)}$ is a quantity of CPUs corresponding to an (n+1)th sub-configuration obtained by performing sorting based on priorities of the M sub-configurations, that is, $O_{CPU}^{(n)}$ is a quantity of CPUs required by the terminal for computing CSI of the (n+1)th sub-configuration obtained by performing sorting based on the priorities of the M sub-configurations.

A quantity of CPUs corresponding to a sub-configuration may be equal to a quantity of reference resources used for channel measurement that are included in the sub-configuration, that is, a quantity of CPUs required for computing CSI of the sub-configuration may be equal to a quantity of reference resources used for channel measurement that are included in the sub-configuration. For example, if a sub-configuration includes two reference resources used for channel measurement, a quantity of CPUs corresponding to the sub-configuration is equal to 2.

In another possible implementation, when the quantities of CPUs corresponding to the M sub-configurations are less than or equal to the quantity P of available CPUs, CSI corresponding to all the M sub-configurations is sent/updated; and when the quantities of CPUs corresponding to the M sub-configurations are greater than the quantity P of available CPUs, CSI corresponding to all the M sub-configurations is discarded/not updated.

In a possible implementation, when the third CSI report is a semi-persistent CSI report sent on the PUSCH for the first time, a quantity of CPUs corresponding to the M sub-configurations is determined based on CSI-RS resources used for channel measurement that are included in the L sub-configurations, where M is less than or equal to L. That is, a quantity of CPUs required for computing the CSI of the M sub-configurations is equal to a sum of CSI-RS resources used for channel measurement that are included in the L sub-configurations. For example, L=3, M=2, and each sub-configuration includes two CSI-RS resources used for channel measurement. In this case, the quantity of CPUs corresponding to the M sub-configurations is equal to 6. When the third CSI report is a semi-persistent CSI report that is sent on the PUSCH other than the semi-persistent CSI report that is sent on the PUSCH for the first time, a quantity of CPUs corresponding to the M sub-configurations is determined based on CSI-RS resources used for channel measurement that are included in the M sub-configurations. That is, a quantity of CPUs required for computing the CSI of the M sub-configurations is equal to a sum of CSI-RS resources used for channel measurement that are included in the M sub-configurations. For example, L=3, M=2, and each sub-configuration includes two CSI-RS resources used for channel measurement. In this case, the quantity of CPUs corresponding to the M sub-configurations is equal to 4.

In a possible implementation, when the third CSI report is an aperiodic CSI report, a quantity of CPUs corresponding to the M sub-configurations is determined based on CSI-RS resources used for channel measurement that are included in the M sub-configurations. That is, a quantity of CPUs required for computing the CSI of the M sub-configurations is equal to a sum of CSI-RS resources used for channel measurement that are included in the M sub-configurations. For example, L=3, M=2, and each sub-configuration includes two CSI-RS resources used for channel measurement. In this case, the quantity of CPUs corresponding to the M sub-configurations is equal to 4.

In a possible implementation, a quantity of CPUs corresponding to the B fifth sub-configurations is determined based on a quantity of CSI-RS resources used for channel measurement that are included in the B sub-configurations. If a sub-configuration includes one CSI-RS resource used for channel measurement, one CPU is occupied; and if a sub-configuration includes two CSI-RS resources, two CPUs are occupied, and the rest can be deduced by analogy.

In a possible implementation, a priority of a sub-configuration is determined based on an index of the sub-configuration, and a sub-configuration with a smaller index has a higher priority.

Optionally, the terminal device may perform S430 to determine the B fifth sub-configurations and the M-B sixth sub-configurations based on the quantity P of available CPUs, the quantity of CPUs corresponding to the M sub-configurations, and the priorities corresponding to the M sub-configurations.

According to the solution provided in this application, when a CSI report includes a plurality of pieces of CSI, a CPU-related discarding or updating rule for each sub-configuration is defined, and it is ensured that the terminal device can fully use CSI reporting resources and computational capabilities.

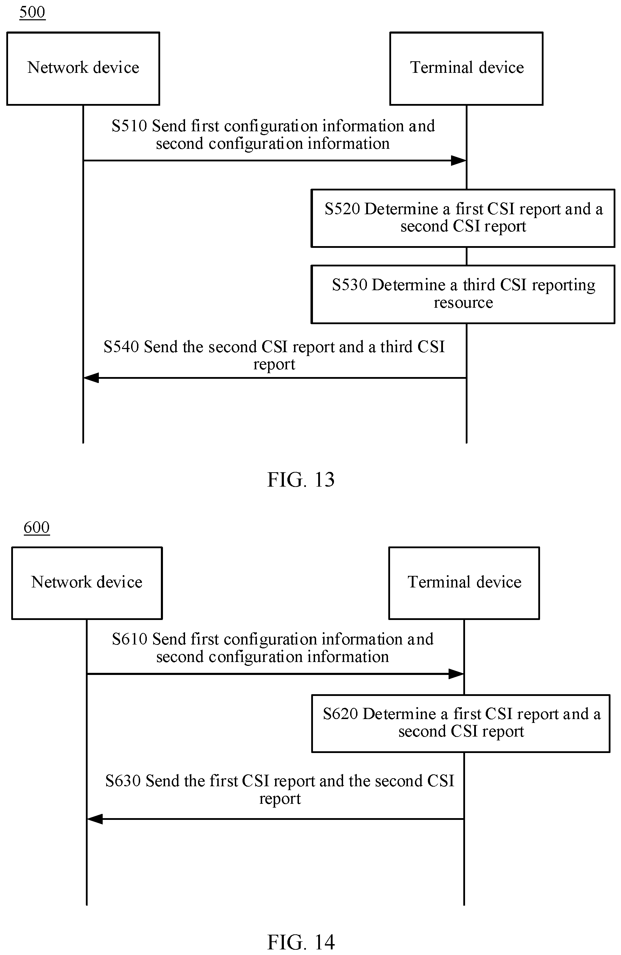

FIG. 13 is a diagram of another CSI transmission method 500 according to an embodiment of this application. As shown in FIG. 13, the method 500 includes at least the following steps.

S510. A network device sends first configuration information and second configuration information, and correspondingly, a terminal device receives the first configuration information and the second configuration.

The first configuration information indicates L sub-configurations and a first CSI reporting resource, and each of the first sub-configurations indicates at least one reference signal resource in a reference signal resource set; and the second configuration information indicates a second CSI reporting resource, the first CSI reporting resource is used to report a first CSI report, a second CSI reporting resource is used to report a second CSI report, and L is a positive integer.

S520. Determine a first CSI report and a second CSI report.

The first CSI report is determined based on the first configuration information, where the first CSI report includes L pieces of seventh CSI, the L pieces of seventh CSI are determined based on the L sub-configurations, the pieces of seventh CSI include L first parts and L second parts, the L first parts indicate at least one of a rank indicator RI, a resource indicator CRI, and a channel quality indicator CQI of a first codebook, and the L second parts indicate any one of a wideband CQI, a wideband layer indicator LI, a wideband precoding matrix indicator PMI, and sub-band CSI of a second codebook; and the second CSI report is determined based on the second configuration information.

In a possible implementation, a priority corresponding to the second CSI report is higher than a priority corresponding to the first CSI report. It should be understood that a priority of a CSI report may be determined based on the foregoing priority computation manner.

S530. Determine a third CSI reporting resource.

When the first CSI reporting resource and the second CSI reporting resource are located on a same carrier and include a same time domain resource, the third CSI reporting resource is determined based on third configuration information.

To be specific, when two CSI reports collide during sending, another CSI reporting resource is determined. The third configuration information may be indicated by the network device, or may be preconfigured. This is not limited in this application.

S540. The terminal device sends the second CSI report and a third CSI report, and correspondingly, the network device receives the second CSI report and the third CSI report.

The second CSI report and the third CSI report are sent on the third CSI reporting resource, where the third CSI report is determined based on a sequence of priorities of the L first parts and the L second parts.

Because the priority of the second CSI report is higher than that of the first CSI report, the second CSI report is completely sent. The third CSI report is determined based on the priorities of the two parts of the first CSI report. Therefore, the third CSI report belongs to the first CSI report and is partial information of the first CSI report.

In a possible implementation, the L second parts include L pieces of wideband CSI and L pieces of sub-band CSI, priorities of the L pieces of wideband CSI are higher than priorities of the L pieces of sub-band CSI, a sequence of the priorities of the L pieces of sub-band CSI is determined based on the priorities corresponding to the L sub-configurations, the pieces of sub-band CSI include odd-numbered sub-band CSI and even-numbered sub-band CSI, and a priority of the odd-numbered sub-band CSI is higher than that of the even-numbered sub-band CSI. To be specific, priorities of the part 2 of CSI are sorted as follows: L pieces of wideband part 2 CSI, part 2 sub-band CSI of an odd-numbered sub-band of a sub-configuration with a highest priority, part 2 sub-band CSI of an even-numbered sub-band of a sub-configuration with a highest priority, part 2 sub-band CSI of an odd-numbered sub-band of a sub-configuration with a second highest priority, part 2 sub-band CSI of an even-numbered sub-band of a sub-configuration with a second highest priority, and the rest can be deduced by analogy.

In another possible implementation, the L second parts include L pieces of wideband CSI, L pieces of odd-numbered sub-band CSI, and L pieces of even-numbered sub-band CSI, priorities of the L pieces of wideband CSI are higher than priorities of the L pieces of odd-numbered sub-band CSI, the priorities of the L pieces of odd-numbered sub-band CSI are higher than priorities of the L pieces of even-numbered sub-band CSI, a sequence of the priorities of the L pieces of odd-numbered sub-band CSI is determined based on the priorities corresponding to the L sub-configurations, and a sequence of the priorities of the L pieces of even-numbered sub-band CSI is determined based on the priorities corresponding to the L sub-configurations. To be specific, priorities of the part 2 of CSI are sorted as follows: L pieces of wideband part 2 CSI, part 2 sub-band CSI of an odd-numbered sub-band of a sub-configuration with a highest priority, part 2 sub-band CSI of an odd-numbered sub-band of a sub-configuration with a second highest priority, and the rest can be deduced by analogy; and part 2 sub-band CSI of an even-numbered sub-band of a sub-configuration with a highest priority, part 2 sub-band CSI of an even-numbered sub-band of a sub-configuration with a second highest priority, and the rest can be deduced by analogy.

It should be understood that the priorities corresponding to the L sub-configurations may be determined based on an index corresponding to each sub-configuration.

According to the solution of this application, when a CSI report includes a plurality of pieces of CSI, if reporting resources of two CSI reports overlap, a rule for discarding CSI corresponding to each sub-configuration for a priority corresponding to each sub-configuration is defined, so that reporting resources can be fully utilized, to ensure reporting of important CSI.

FIG. 14 is a diagram of another CSI transmission method 600 according to an embodiment of this application. As shown in FIG. 14, the method 600 includes at least the following steps.

S610. A network device sends first configuration information and second configuration information, and correspondingly, a terminal device receives the first configuration information and the second configuration information.

The first configuration information indicates L sub-configurations and a first CSI reporting resource, and each of the first sub-configurations indicates at least one reference signal resource in a reference signal resource set; and the second configuration information indicates a second CSI reporting resource, the first CSI reporting resource is used to report a first CSI report, a second CSI reporting resource is used to report a second CSI report, and L is a positive integer.

During configuration, the network device may enable the first CSI reporting resource and the second CSI reporting resource not to overlap in time domain. That is, it may be specified that resources of the two CSI reports do not include overlapping time domain resources. In this case, a problem that two CSI reports collide does not occur. In other words, it is specified that a CSI report including L sub-configurations is not allowed to include a time domain resource overlapping with that of any CSI report, and overlapping time domain resources may be understood as identical OFDM symbols, or may be understood as identical slots.

S620. Determine a first CSI report and a second CSI report.

S630. The terminal device sends the first CSI report on a first CSI reporting resource, and sends the second CSI report on a second CSI reporting resource, and correspondingly, the network device receives the first CSI report and the second CSI report.

According to the solution of this application, when a CSI report includes a plurality of pieces of CSI, it can be ensured that reporting resources of the CSI report do not collide, thereby improving communication stability.

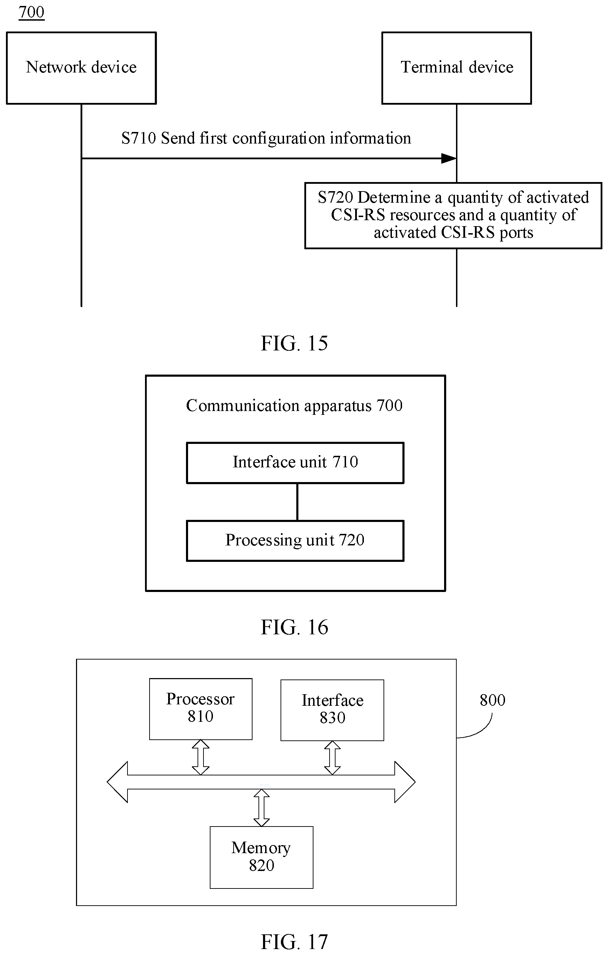

FIG. 15 is a diagram of another CSI transmission method 700 according to an embodiment of this application. As shown in FIG. 15, the method 700 includes at least the following steps.

S710. A network device sends first configuration information, and correspondingly, a terminal device receives the first configuration information.

The first configuration information indicates L sub-configurations, the first configuration information corresponds to a reference signal resource set, the reference signal set includes a first CSI-RS resource, the first CSI-RS resource includes H CSI-RS ports, each of the G sub-configurations includes first indication information, the G sub-configurations belong to the L sub-configurations, and first indication information of a $g^{th}$ sub-configuration indicates J CSI-RS ports of the H CSI-RS ports of the first CSI-RS resource, and a reference signal resource that is used for channel measurement and that corresponds to the $g^{th}$ sub-configuration is a resource included in the J CSI-RS ports in the first CSI-RS resource, where L, H, G, and K are positive integers. The reference signal resources that are used for channel measurement and that correspond to the $g^{th}$ sub-configuration may be understood as reference signal resources used to compute CSI corresponding to the $g^{th}$ sub-configuration.

The reference signal set includes at least one second CSI-RS resource, the second CSI-RS resource includes H CSI-RS ports, each of the G sub-configurations includes first indication information, the first indication information of the $g^{th}$ sub-configuration indicates J CSI-RS ports of the H CSI-RS ports of each second CSI-RS reference resource in the at least one second CSI-RS resource, and a reference signal resource that is used for channel measurement and that corresponds to the $g^{th}$ sub-configuration is a resource included in the J CSI-RS ports of each second CSI-RS reference resource in the at least one second CSI-RS resource, where L, H, G, and K are positive integers. The reference signal resources that are used for channel measurement and that correspond to the $g^{th}$ sub-configuration may be understood as reference signal resources used to compute CSI of the $g^{th}$ sub-configuration.

S720. Determine a quantity of activated CSI-RS resources and a quantity of activated CSI-RS ports based on the first configuration information.

In a possible implementation, when activated CSI-RS resources are determined, it is determined, based on the first configuration information and the first CSI-RS resource, that the quantity of activated CSI-RS resources is equal to a quantity of first CSI-RS resources; and when the quantity of activated CSI-RS ports is determined, the quantity of activated CSI-RS ports determined based on the first configuration information and the first CSI-RS resource is equal to a sum of J ports indicated by the L sub-configurations. For example, the first CSI-RS resource includes H=32 CSI-RS ports, and L=2 sub-configurations, numbered as a sub-configuration 1 and a sub-configuration 2, first indication information in the sub-configuration 1 indicates 16 ports of the 32 ports, and first indication information in the sub-configuration 2 indicates 8 ports of the 32 ports. In this case, when activated CS-RS resources are computed, it is determined, based on the first configuration information and the first CSI-RS resource, that the quantity of activated CSI-RS resources is equal to the quantity of first CSI-RS resources and is 1; and when activated CSI-RS ports are computed, the quantity of activated CSI-RS ports determined based on the first configuration information and the first CSI-RS resource is equal to a sum of J ports indicated by the L sub-configurations, that is, 16+8=24 activated CSI-RS ports.

In another possible implementation, when activated CSI-RS resources are determined, it is determined, based on the first configuration information and the first CSI-RS resource, that the quantity of activated CSI-RS resources is equal to a quantity of first CSI-RS resources; and when the quantity of activated CSI-RS ports, the quantity of activated CSI-RS ports determined based on the first configuration information and the first CSI-RS resource is equal to a maximum value of J indicated by the L sub-configurations. For example, the first CSI-RS resource includes H=32 CSI-RS ports, and L=2 sub-configurations, numbered as a sub-configuration 1 and a sub-configuration 2, first indication information in the sub-configuration 1 indicates 16 ports of the 32 ports, and first indication information in the sub-configuration 2 indicates 8 ports of the 32 ports. In this case, when activated CS-RS resources are computed, the first CSI-RS resource is computed once; and when activated CSI-RS ports are computed, only 16 CSI-RS ports of the sub-configuration 1 are computed.

In another possible implementation, the L pieces of CSI are determined based on the L sub-configurations. If one of the L pieces of CSI includes first information and L CQIs, and the first information includes at least one of a first CRI and a first PMI, when activated CSI-RS resources are determined, a quantity of activated CSI-RS resources determined based on the first configuration information is equal to a sum of a quantity of first reference resources, a quantity of at least one second reference resource, and L-1. When the quantity of activated CSI-RS ports is determined, the quantity of activated CSI-RS resources determined based on the first configuration information is equal to a sum of a total quantity of ports indicated by a reference sub-configuration from the first reference resource and the at least one second reference resource and J indicated by each of L-1 sub-configurations other than the reference sub-configuration. The reference sub-configuration may be a sub-configuration with a maximum J, or a self-configuration with a minimum index. For example, the first CSI-RS resource includes H=32 CSI-RS ports, a total of one second CSI-RS resource includes 32 ports, and L=2 sub-configurations, numbered as a sub-configuration 1 and a sub-configuration 2, first indication information in the sub-configuration 1 indicates 16 ports of the 32 ports, and first indication information in the sub-configuration 2 indicates 8 ports of the 32 ports. In this case, when activated CS-RS resources are computed, a quantity of activated resources determined based on the first configuration information is 2+1=3; and when activated CSI-RS ports are computed, a quantity of activated resources determined based on the first configuration information is 16 * 2 + 8 = 40. Optionally, the first CRI is an index of one third CSI-RS in the first CSI-RS resource and the at least one second CSI-RS resource, the L CQIs are determined based on L fourth CSI-RS resources, and the L fourth CSI-RS resources are determined from a third CSI-RS resource based on L pieces of first indication information. In other words, the fourth CSI-RS resource is a resource corresponding to J ports in the third CSI-RS resource, the L fourth CSI-RS resources are included in the activated CSI-RS resources determined based on the first configuration information, and ports of the L fourth CSI-RS resources are included in the activated CSI-RS ports determined based on the first configuration information. Optionally, L-1 fifth CSI-RS resources are not included in the activated CSI-RS resources determined based on the first configuration information (which may be understood as being not counted into the activated CSI-RS resources determined based on the first configuration information), and ports of the L-1 fifth CSI-RS resources are not included in the activated CSI-RS ports determined based on the first configuration information (which may be understood as being not counted into the activated CSI-RS ports determined based on the first configuration information). The fifth CSI-RS resources include resources included in J ports of a sixth CSI-RS resource indicated by first indication information in any sub-configuration other than the reference sub-configuration in the M sub-configurations, and the sixth CSI-RS resource is any resource other than the third CSI-RS in the first CSI-RS resource and the at least one second CSI-RS resource.

According to the solution of this application, a method for determining, by the terminal, a quantity of activated CSI-RS resources and a quantity of activated CSI-RS ports is provided, to help the terminal and the network device uniformly understand the quantity of activated CSI-RS resources and the quantity of activated CSI-RS ports, so that the network device does not configure a quantity of CSI-RS resources and a quantity of CSI-RS ports that exceed a capability limitation of the terminal.

According to the foregoing method, FIG. 16 is a diagram of a wireless communication apparatus 800 according to an embodiment of this application.

As shown in FIG. 16, the communication apparatus 800 may include an interface unit 810 and a processing unit 820.

In a possible design, the communication apparatus 800 may alternatively correspond to the terminal device in the foregoing method embodiments.

For example, the communication apparatus 800 may correspond to the terminal device in the method 200 according to embodiments of this application. The interface unit 810 in the communication apparatus 800 may include a sending unit and a receiving unit. The interface unit 810 in the communication apparatus 800 is configured to receive first configuration information, where the first configuration information indicates L sub-configurations, each of the L sub-configurations indicates at least one reference signal resource in a reference signal resource set, and L is a positive integer. The processing unit 820 in the communication apparatus 800 is configured to determine, based on the first configuration information, a first time domain resource corresponding to M sub-configurations, where the M sub-configurations belong to the L sub-configurations, and M is a positive integer less than or equal to L. The interface unit 810 is further configured to send a first CSI report, where the first CSI report includes N pieces of first CSI, the N pieces of first CSI are determined based on N first sub-configurations, at least one reference signal resource indicated by the first sub-configuration includes a first reference signal resource, the first reference signal resource is not later than a first time domain resource corresponding to the first sub-configuration in time domain, and N is a positive integer less than or equal to M.

In a possible implementation, the first reference signal resource is further located in a first time segment, and the first time segment is a discontinuous reception DRX active time segment of the terminal device.

In a possible implementation, the first configuration information indicates any one of reconfiguration, serving cell activation, bandwidth part BWP switching, and semi-persistent CSI activation.

In a possible implementation, the processing unit 820 is specifically configured to determine M first time domain resources based on the first configuration information, where the M first time domain resources are in one-to-one correspondence with the M sub-configurations, and a time domain location of the first time domain resource is determined based on a reference signal resource indicated by a sub-configuration corresponding to the first time domain resource.

In a possible implementation, the processing unit 820 is specifically configured to determine one first time domain resource based on the first configuration information, where a time domain location of the first time domain resource is determined based on a reference signal resource indicated by the L sub-configurations.

In a possible implementation, the processing unit 820 is further configured to discard M-N pieces of second CSI, where the M-N pieces of second CSI correspond to M-N second sub-configurations, the M-N second sub-configurations are sub-configurations other than the N first sub-configurations in the M sub-configurations, and reference signal resources indicated by the second sub-configurations are all later than first time domain resources corresponding to the second sub-configurations in time domain.

It should be understood that the M sub-configurations are sub-configurations that are of the L sub-configurations and that are triggered by a network device.

For another example, the communication apparatus 800 may correspond to the terminal device in the method 300 according to embodiments of this application. The interface unit 810 in the communication apparatus 800 may include a sending unit and a receiving unit. The interface unit 810 in the communication apparatus 800 is configured to receive first configuration information, where the first configuration information indicates L sub-configurations, each of the L sub-configurations indicates at least one reference signal resource in a reference signal resource set, and L is a positive integer. The processing unit 820 in the communication apparatus 800 is configured to determine M second time domain resources based on a last reference signal resource in time domain indicated by each of M sub-configurations, where the M sub-configurations belong to the L sub-configurations, the M second time domain resources are in one-to-one correspondence with the M sub-configurations, and M is a positive integer less than or equal to L. The interface unit 810 is further configured to send a second CSI report on a first CSI reporting resource, where the second CSI report includes A pieces of third CSI, the A pieces of third CSI are updated based on A third sub-configurations, a second time domain resource corresponding to the third sub-configuration is earlier than the first CSI reporting resource in time domain, the first CSI reporting resource is indicated by the first configuration information, and A is a positive integer less than or equal to M.

In a possible implementation, the second CSI report further includes M-A pieces of non-updated fourth CSI, the M-A pieces of fourth CSI correspond to M-A fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

In a possible implementation, the second time domain resource and a last reference signal resource in time domain indicated by a corresponding sub-configuration are spaced apart by a first value, and the first value is CSI computation time.

For another example, the communication apparatus 800 may correspond to the terminal device in the method 400 according to embodiments of this application. The interface unit 810 in the communication apparatus 800 may include a sending unit and a receiving unit. The interface unit 810 in the communication apparatus 800 is configured to receive first configuration information, where the first configuration information indicates L sub-configurations, each of the L sub-configurations indicates at least one reference signal resource in a reference signal resource set, the reference signal resource is used for channel measurement, and L is a positive integer. The processing unit 820 in the communication apparatus 800 is configured to determine a quantity P of available CSI processing units CPUs in a first time unit, where P is a positive integer, the first time unit is a time unit used to start processing CSI computation corresponding to M sub-configurations indicated by the first configuration information, and the M sub-configurations belong to the L sub-configurations. The interface unit 810 is further configured to send a third CSI report, where the third CSI report includes B pieces of fifth CSI and M-B pieces of sixth CSI, the B pieces of fifth CSI are updated based on B fifth sub-configurations, the M-B pieces of sixth CSI correspond to M-B sixth sub-configurations, a sum of quantities of CPUs corresponding to the B fifth sub-configurations is less than or equal to the quantity P of available CPUs, and priorities corresponding to the B fifth sub-configurations are higher than priorities corresponding to the M-B sixth sub-configurations, M is a positive integer less than or equal to L, and B is a positive integer less than or equal to M.

In a possible implementation, quantities of CPUs corresponding to the M sub-configurations are determined based on a quantity of reference signal resources indicated by each sub-configuration.

In a possible implementation, priorities corresponding to the M sub-configurations are determined based on an index corresponding to each sub-configuration.

For another example, the communication apparatus 800 may correspond to the terminal device in the method 500 according to embodiments of this application. The interface unit 810 in the communication apparatus 800 may include a sending unit and a receiving unit. The interface unit 810 in the communication apparatus 800 is configured to receive first configuration information and second configuration information, where the first configuration information indicates L sub-configurations and a first CSI reporting resource, each of the first sub-configurations indicates at least one reference signal resource in a reference signal resource set, the second configuration information indicates K second sub-configurations and a second CSI reporting resource, each of the second sub-configurations indicates at least one reference signal resource in the reference signal resource set, the reference signal resource is used for channel measurement, the first CSI reporting resource is used to report a first CSI report, the second CSI reporting resource is used to report a second CSI report, and L is a positive integer. The processing unit 820 in the communication apparatus 800 is configured to: determine the first CSI report based on the first configuration information, where the first CSI report includes L pieces of seventh CSI, the L pieces of seventh CSI are determined based on the L seventh sub-configurations, the pieces of first CSI include L first parts and L second parts, the L first parts indicate at least one of a rank indicator RI, a resource indicator CRI, and a channel quality indicator CQI of a first codebook, and the L second parts indicate any one of a wideband CQI, a wideband layer indicator LI, a wideband precoding matrix indicator PMI, and sub-band CSI of a second codebook; determine the second CSI report based on the second configuration information, where a priority corresponding to the second CSI report is higher than a priority corresponding to the first CSI report; and determine, when the first CSI reporting resource and the second CSI reporting resource are located on a same carrier and include a same time domain resource, a third CSI reporting resource based on third configuration information. The interface unit 810 is further configured to send the second CSI report and a third CSI report on the third CSI reporting resource, where the third CSI report is determined based on a sequence of priorities of the L first parts and the L second parts.

In a possible implementation, the priorities corresponding to the L first parts are determined based on priorities corresponding to the L seventh sub-configurations.

In a possible implementation, the L second parts include L pieces of wideband CSI and L pieces of sub-band CSI, priorities of the L pieces of wideband CSI are higher than priorities of the L pieces of sub-band CSI, a sequence of the priorities of the L pieces of sub-band CSI is determined based on the priorities corresponding to the L seventh sub-configurations, the pieces of sub-band CSI include odd-numbered sub-band CSI and even-numbered sub-band CSI, and a priority of the odd-numbered sub-band CSI is higher than that of the even-numbered sub-band CSI.

In a possible implementation, the L second parts include L pieces of wideband CSI, L pieces of odd-numbered sub-band CSI, and L pieces of even-numbered sub-band CSI, priorities of the L pieces of wideband CSI are higher than priorities of the L pieces of odd-numbered sub-band CSI, the priorities of the L pieces of odd-numbered sub-band CSI are higher than priorities of the L pieces of even-numbered sub-band CSI, a sequence of the priorities of the L pieces of odd-numbered sub-band CSI is determined based on the priorities corresponding to the L seventh sub-configurations, and a sequence of the priorities of the L pieces of even-numbered sub-band CSI is determined based on the priorities corresponding to the L seventh sub-configurations.

In a possible implementation, priorities corresponding to the L sub-configurations are determined based on an index corresponding to each sub-configuration.

The interface unit 810 in the communication apparatus 800 performs receiving and sending operations performed by the terminal device in the foregoing method embodiments, and the processing unit 820 performs operations other than the receiving and sending operations.

In another possible design, the communication apparatus 800 may correspond to the network device in the foregoing method embodiments.

For example, the communication apparatus 800 may correspond to the network device (or the base station or the gNB) in the method 200 according to embodiments of this application. The interface unit 810 in the communication apparatus 800 is configured to send first configuration information, where the first configuration information indicates L sub-configurations, each of the L sub-configurations indicates at least one reference signal resource in a reference signal resource set, and L is a positive integer. The interface unit 810 is further configured to receive a first CSI report, where the first CSI report includes N pieces of first CSI, the N pieces of first CSI are determined based on N first sub-configurations, at least one reference signal resource indicated by the first sub-configuration includes a first reference signal resource, the first reference signal resource is earlier than a first time domain resource corresponding to the first sub-configuration in time domain, the first time domain resource corresponds to M sub-configurations, the first time domain resource is determined based on the first configuration information, the M sub-configurations belong to the L sub-configurations, M is a positive integer less than or equal to L, and N is a positive integer less than or equal to M.

In a possible implementation, the first reference signal resource is further located in a first time segment, and the first time segment is a discontinuous reception DRX active time segment of the terminal device.

In a possible implementation, the first configuration information indicates any one of reconfiguration, serving cell activation, bandwidth part BWP switching, and semi-persistent CSI activation.

In a possible implementation, the M first time domain resources are determined based on the first configuration information, the M first time domain resources are in one-to-one correspondence with the M sub-configurations, and a time domain location of the first time domain resource is determined based on a reference signal resource indicated by a sub-configuration corresponding to the first time domain resource.

In a possible implementation, one first time domain resource is determined based on the first configuration information, and a time domain location of the first time domain resource is determined based on a reference signal resource indicated by the L sub-configurations.

For another example, the communication apparatus 800 may correspond to the network device (or the base station or the gNB) in the method 300 according to embodiments of this application. The interface unit 810 in the communication apparatus 800 is configured to send first configuration information, where the first configuration information indicates L sub-configurations, each of the L sub-configurations indicates at least one reference signal resource in a reference signal resource set, and L is a positive integer. The interface unit 810 is further configured to receive a second CSI report on a first CSI reporting resource, where the second CSI report includes A pieces of third CSI, the A pieces of third CSI are updated based on A third sub-configurations, a second time domain resource corresponding to the third sub-configuration is earlier than the first CSI reporting resource in time domain, the second time domain resource is determined based on a last reference signal resource in time domain indicated by each of the M sub-configurations, the M sub-configurations are in one-to-one correspondence with the M second time domain resources, the first CSI reporting resource is indicated by the first configuration information, M is a positive integer less than or equal to L, and A is a positive integer less than or equal to M.

In a possible implementation, the second CSI report further includes M-A pieces of non-updated fourth CSI, the M-A pieces of fourth CSI correspond to M-A fourth sub-configurations, the M-A fourth sub-configurations are determined from the M sub-configurations based on the M second time domain resources, the M-A fourth sub-configurations are sub-configurations other than the A third sub-configurations in the M sub-configurations, and a second time domain resource corresponding to the fourth sub-configuration is later than the first CSI reporting resource in time domain.

In a possible implementation, the second time domain resource and a last reference signal resource in time domain indicated by a corresponding sub-configuration are spaced apart by a first value, and the first value is preset or determined based on the first configuration information.

For another example, the communication apparatus 800 may correspond to the network device (or the base station or the gNB) in the method 400 according to embodiments of this application. The interface unit 810 in the communication apparatus 800 is configured to send first configuration information, where the first configuration information indicates L sub-configurations, each of the L sub-configurations indicates at least one reference signal resource in a reference signal resource set, and L is a positive integer. The interface unit 810 is further configured to receive a third CSI report, where the fourth CSI report includes B pieces of fifth CSI and M-B pieces of sixth CSI, the B pieces of fifth CSI are updated based on B fifth sub-configurations, the M-B pieces of sixth CSI correspond to M-B sixth sub-configurations, a sum of quantities of CSI processing units CPUs corresponding to the B fifth sub-configurations is less than or equal to the quantity P of available CPUs, and priorities corresponding to the B fifth sub-configurations are higher than priorities corresponding to the M-B sixth sub-configurations sixth sub-configurations, the quantity P of available CPUs corresponds to a first time unit, the first time unit is a time unit used to start processing CSI computation corresponding to M sub-configurations indicated by the first configuration information, the M sub-configurations belong to the L sub-configurations, P is a positive integer, M is a positive integer less than or equal to L, and B is a positive integer less than or equal to M.

In a possible implementation, quantities of CPUs corresponding to the M sub-configurations are determined based on a quantity of reference signal resources indicated by each sub-configuration.

In a possible implementation, priorities corresponding to the M sub-configurations are determined based on an index corresponding to each sub-configuration.

For another example, the communication apparatus 800 may correspond to the network device (or the base station or the gNB) in the method 500 according to embodiments of this application. The interface unit 810 in the communication apparatus 800 is configured to send first configuration information and second configuration information, where the first configuration information indicates L sub-configurations and a first CSI reporting resource, each of the first sub-configurations indicates at least one reference signal resource in a reference signal resource set, the second configuration information indicates a second CSI reporting resource, the first CSI reporting resource is used to report a first CSI report, the second CSI reporting resource is used to report a second CSI report, and L is a positive integer. The interface unit 810 is further configured to receive, when the first CSI reporting resource and the second CSI reporting resource are located on a same carrier and include a same time domain resource, the second CSI report and a third CSI report on a third CSI reporting resource, where the third CSI report is determined based on a sequence of priorities of L first parts and L second parts, the first CSI report is determined based on the first configuration information, the first CSI report includes L pieces of seventh CSI, the L pieces of seventh CSI are determined based on the L seventh sub-configurations, the pieces of seventh CSI include L first parts and L second parts, the L first parts indicate at least one of a rank indicator RI, a resource indicator CRI, and a channel quality indicator CQI of a first codebook, the L second parts indicate any one of a wideband CQI, a wideband layer indicator LI, a wideband precoding matrix indicator PMI, and sub-band CSI of a second codebook, the second CSI report is determined based on the second configuration information, a priority corresponding to the second CSI report is higher than a priority corresponding to the first CSI report, and the third CSI reporting resource is determined based on third configuration information.

In a possible implementation, the priorities corresponding to the L first parts are determined based on priorities corresponding to the L seventh sub-configurations.

In a possible implementation, the L second parts include L pieces of wideband CSI and L pieces of sub-band CSI, priorities of the L pieces of wideband CSI are higher than priorities of the L pieces of sub-band CSI, a sequence of the priorities of the L pieces of sub-band CSI is determined based on the priorities corresponding to the L seventh sub-configurations, the pieces of sub-band CSI include odd-numbered sub-band CSI and even-numbered sub-band CSI, and a priority of the odd-numbered sub-band CSI is higher than that of the even-numbered sub-band CSI.

In a possible implementation, the L second parts include L pieces of wideband CSI, L pieces of odd-numbered sub-band CSI, and L pieces of even-numbered sub-band CSI, priorities of the L pieces of wideband CSI are higher than priorities of the L pieces of odd-numbered sub-band CSI, the priorities of the L pieces of odd-numbered sub-band CSI are higher than priorities of the L pieces of even-numbered sub-band CSI, a sequence of the priorities of the L pieces of odd-numbered sub-band CSI is determined based on the priorities corresponding to the L seventh sub-configurations, and a sequence of the priorities of the L pieces of even-numbered sub-band CSI is determined based on the priorities corresponding to the L seventh sub-configurations.

In a possible implementation, priorities corresponding to the L sub-configurations are determined based on an index corresponding to each sub-configuration.

The interface unit 810 in the communication apparatus 800 performs receiving and sending operations performed by the network device (or the base station or the gNB) in the foregoing method embodiments, and the processing unit 820 performs operations other than the receiving and sending operations.

According to the foregoing method, FIG. 17 is a diagram of a communication apparatus 900 according to an embodiment of this application. As shown in FIG. 17, the apparatus 900 may be a terminal device, or may be a network device.

The apparatus 900 may include a processor 910 (namely, an example of a processing unit) and a memory 920. The memory 920 is configured to store instructions, and the processor 910 is configured to execute the instructions stored in the memory 920, to enable the apparatus 900 to implement the steps performed by the terminal device or the network device in the method 200, the method 300, the method 400, or the method 500.

Further, the apparatus 900 may further include an interface 930 (that is, an example of an interface unit module). Further, the processor 910, the memory 920, and the interface 930 may communicate with each other through an internal connection path, to transfer a control signal and/or a data signal. The memory 920 is configured to store a computer program. The processor 910 may be configured to invoke the computer program from the memory 920 and run the computer program, to control the interface 930 to receive a signal or send a signal, to complete the steps performed by the terminal device or the network device in the foregoing methods. The memory 920 may be integrated into the processor 910, or may be separated from the processor 910.

In a possible implementation, if the communication apparatus 900 is a communication device, the interface 930 is a receiver or a transmitter. The receiver and the transmitter may be a same physical entity or different physical entities. When the receiver and the transmitter are a same physical entity, the receiver and the transmitter may be collectively referred to as a transceiver.

In a possible implementation, if the communication apparatus 900 is a chip or a circuit, the interface 930 is an input interface, or the interface 930 is an output interface.

In an implementation, it may be considered that a function of the interface 930 is implemented by using a transceiver circuit or a dedicated transceiver chip. It may be considered that the processor 910 is implemented by a dedicated processing chip, a processing circuit, a processor, or a general-purpose chip.

In another implementation, it may be considered that a communication device provided in this embodiment of this application is implemented by using a general-purpose computer. To be specific, program code for implementing functions of the processor 910 and the interface 930 is stored in the memory 920, and the general-purpose processor implements the functions of the processor 910 and the interface 930 by executing the code in the memory 920.

For concepts, explanations, detailed descriptions, and other steps of the apparatus 900 that are related to the technical solutions provided in embodiments of this application, refer to the descriptions of the content in the foregoing methods or other embodiments. Details are not described herein again.

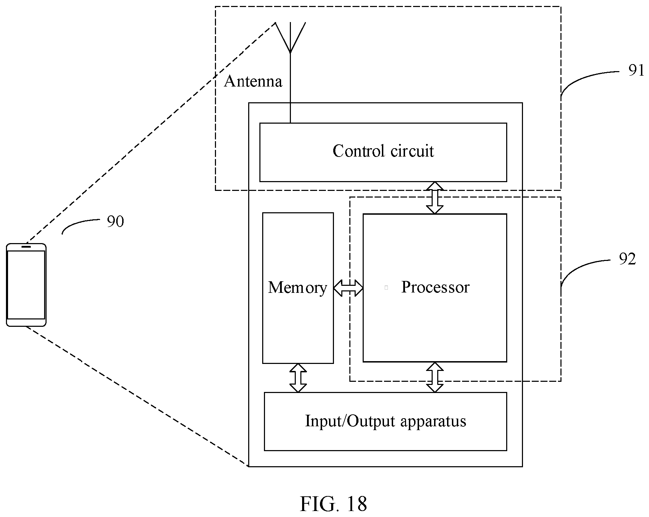

FIG. 18 is a diagram of a structure of a terminal device 90 according to this application. For ease of description, FIG. 18 shows only main components of the communication apparatus. As shown in FIG. 18, the terminal device 90 includes a processor, a memory, a control circuit, an antenna, and an input/output apparatus.

The processor is mainly configured to process a communication protocol and communication data, control an entire terminal device, execute a software program, and process data of the software program, for example, is configured to support the terminal device to perform the actions described in the foregoing embodiments of the indication method for transmitting a precoding matrix. The memory is mainly configured to store the software program and the data, for example, store a codebook described in the foregoing embodiments. The control circuit is mainly configured to convert a baseband signal and a radio frequency signal and process the radio frequency signal. The control circuit and the antenna together may also be referred to as a transceiver, and are mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor may read a software program in a storage unit, explain and execute instructions of the software program, and process data of the software program. When data needs to be sent wirelessly, the processor performs baseband processing on the to-be-sent data, and then outputs a baseband signal to a radio frequency circuit. The radio frequency circuit performs radio frequency processing on the baseband signal, and then sends, by using the antenna, a radio frequency signal in an electromagnetic wave form. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 18 shows only one memory and one processor. In an actual terminal device, there may be a plurality of processors and memories. The memory may also be referred to as a storage medium, a storage device, or the like. This is not limited in embodiments of this application.

In an optional implementation, the processor may include a baseband processor and a central processing unit. The baseband processor is mainly configured to process the communication protocol and the communication data. The central processing unit is mainly configured to control the entire terminal device, execute the software program, and process the data of the software program. Functions of the baseband processor and the central processing unit are integrated into the processor in FIG. 18. A person skilled in the art may understand that the baseband processor and the central processing unit each may alternatively be independent processors, and are interconnected by using a technology like a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may alternatively be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

As shown in FIG. 18, the terminal device 90 includes an interface unit 91 and a processing unit 92. The interface unit may also be referred to as a transceiver, a transceiver machine, a transceiver apparatus, or the like. Optionally, a component configured to implement a receiving function in the interface unit 91 may be considered as a receiving unit, and a component configured to implement a sending function in the interface unit 91 may be considered as a sending unit. In other words, the interface unit 91 includes the receiving unit and the sending unit. For example, the receiving unit may also be referred to as a receiver, a receive machine, or a receiving circuit, and the sending unit may also be referred to as a transmitter, a transmit machine, or a transmitting circuit.

The terminal device shown in FIG. 18 may perform actions performed by the terminal device in the method 200, the method 300, the method 400, or the method 500. To avoid repetition, detailed descriptions thereof are omitted herein.

An embodiment of this application further provides a computer-readable storage medium. The computer-readable storage medium stores computer instructions used to implement the method performed by the network device or the terminal device in the foregoing method embodiments.

For example, when a computer program is executed by a computer, the computer is enabled to implement the method performed by the network device or the terminal device in the foregoing method embodiments.

An embodiment of this application further provides a computer program product including instructions. When the instructions are executed by a computer, the computer is enabled to implement the method performed by the terminal device or the method performed by the network device or the terminal device in the foregoing method embodiments.

An embodiment of this application further provides a communication system. The communication system includes the network device and the terminal device in the foregoing embodiments.

For explanations and beneficial effect of related content in any one of the apparatuses provided above, refer to the corresponding method embodiment provided above. Details are not described herein again.

It should be understood that, the processor in embodiments of this application may be a central processing unit (central processing unit, CPU), or may be another general purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a

EP 4 750 194 A1

synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computing device (which may be a personal computer, a server, a network device, or the like) to perform all or some of the steps of the methods described in embodiments of this application. The foregoing storage medium includes: any medium that can store program code, such as a USB flash disk, a removable hard disk drive, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A channel state information CSI transmission method, comprising:

   receiving first configuration information, wherein the first configuration information indicates L sub-configurations, each of the L sub-configurations indicates at least one reference signal resource in a reference signal resource set, and L is a positive integer;
   determining, based on the first configuration information, a first time domain resource corresponding to M sub-configurations, wherein the M sub-configurations belong to the L sub-configurations, and M is a positive integer less than or equal to L; and
   sending a first CSI report, wherein the first CSI report comprises N pieces of first CSI, the N pieces of first CSI are determined based on N first sub-configurations, at least one reference signal resource indicated by the first sub-configuration comprises a first reference signal resource, the first reference signal resource is not later than a first time domain resource corresponding to the first sub-configuration in time domain, and N is a positive integer less than or equal to M.

2. The method according to claim 1, wherein the first reference signal resource is further located in a first time segment, and the first time segment is a discontinuous reception DRX active time segment of a terminal device.

3. The method according to claim 1 or 2, wherein the method further comprises: discarding M-N pieces of second CSI, wherein the M-N pieces of second CSI correspond to M-N second sub-configurations, the M-N second sub-configurations are sub-configurations other than the N first sub-configurations in the M sub-configurations, and reference signal resources indicated by the second sub-configurations are all later than first time domain resources corresponding to the second sub-configurations in time domain.

4. The method according to any one of claims 1 to 3, wherein the first configuration information indicates any one of reconfiguration, serving cell activation, bandwidth part BWP switching, and semi-persistent CSI activation.

5. The method according to any one of claims 1 to 4, wherein determining, based on the first configuration information, the first time domain resource corresponding to the M sub-configurations comprises:
   determining M first time domain resources based on the first configuration information, wherein the M first time domain resources are in one-to-one correspondence with the M sub-configurations, and a time domain location of the first time domain resource is determined based on a reference signal resource indicated by a sub-configuration corresponding to the first time domain resource.

6. The method according to any one of claims 1 to 5, wherein determining, based on the first configuration information, the first time domain resource corresponding to the M sub-configurations comprises:
   determining one first time domain resource based on the first configuration information, wherein a time domain location of the first time domain resource is determined based on a reference signal resource indicated by the L sub-configurations.

7. A channel state information CSI transmission method, comprising:

   receiving first configuration information, wherein the first configuration information indicates L sub-configurations, each of the L sub-configurations indicates at least one reference signal resource in a reference signal resource set, and L is a positive integer;
   determining M second time domain resources based on a last reference signal resource in time domain indicated by each of M sub-configurations, wherein the M sub-configurations belong to the L sub-configurations, the M second time domain resources are in one-to-one correspondence with the M sub-configurations, and M is a positive integer less than or equal to L; and
   sending a second CSI report on a first CSI reporting resource, wherein the second CSI report comprises A pieces of third CSI, the A pieces of third CSI are updated based on A third sub-configurations, a second time domain resource corresponding to the third sub-configuration is earlier than the first CSI reporting resource in time domain, the first CSI reporting resource is indicated by the first configuration information, and A is a positive integer less than or equal to M.

8. The method according to claim 7, wherein the second CSI report further comprises M-A pieces of non-updated fourth CSI, the M-A pieces of fourth CSI correspond to M-A fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

9.  The method according to claim 7 or 8, wherein determining the M second time domain resources based on the last reference signal resource in time domain indicated by each of M sub-configurations comprises:
    the second time domain resource and a last reference signal resource in time domain indicated by a corresponding sub-configuration are spaced apart by a first value, and the first value is CSI computation time.

10. A channel state information CSI transmission method, comprising:

    receiving first configuration information, wherein the first configuration information indicates L sub-configurations, each of the L sub-configurations indicates at least one reference signal resource in a reference signal resource set, and L is a positive integer;
    determining a quantity P of available CSI processing units CPUs in a first time unit, wherein P is a positive integer, the first time unit is a time unit used to start processing CSI computation corresponding to M sub-configurations indicated by the first configuration information, and the M sub-configurations belong to the L sub-configurations; and
    sending a third CSI report, wherein the third CSI report comprises B pieces of fifth CSI and M-B pieces of sixth CSI, the B pieces of fifth CSI are updated based on B fifth sub-configurations, the M-B pieces of sixth CSI correspond to M-B sixth sub-configurations, a sum of quantities of CPUs corresponding to the B fifth sub-configurations is less than or equal to the quantity P of available CPUs, and priorities corresponding to the B fifth sub-configurations are higher than priorities corresponding to the M-B sixth sub-configurations, M is a positive integer less than or equal to L, and B is a positive integer less than or equal to M.

11. The method according to claim 10, wherein a quantity of CPUs corresponding to the M sub-configurations is determined based on a quantity of reference signal resources indicated by each sub-configuration.

12. The method according to claim 10 or 11, wherein priorities corresponding to the M sub-configurations are determined based on an index corresponding to each sub-configuration.

13. A channel state information CSI transmission method, comprising:

    receiving first configuration information and second configuration information, wherein the first configuration information indicates L sub-configurations and a first CSI reporting resource, each of the first sub-configurations indicates at least one reference signal resource in a reference signal resource set, the second configuration information indicates a second CSI reporting resource, the first CSI reporting resource is used to report a first CSI report, the second CSI reporting resource is used to report a second CSI report, and L is a positive integer;
    determining the first CSI report based on the first configuration information, wherein the first CSI report comprises L pieces of seventh CSI, the L pieces of seventh CSI are determined based on the L sub-configurations, the seventh CSI comprises L first parts and L second parts, the L first parts indicate at least one of a rank indicator RI, a resource indicator CRI, and a channel quality indicator CQI of a first codebook, and the L second parts indicate any one of a wideband CQI, a wideband layer indicator LI, a wideband precoding matrix indicator PMI, and sub-band CSI of a second codebook;
    determining the second CSI report based on the second configuration information, wherein a priority corresponding to the second CSI report is higher than a priority corresponding to the first CSI report;
    when the first CSI reporting resource and the second CSI reporting resource are located on a same carrier and comprise a same time domain resource, determining a third CSI reporting resource based on third configuration information; and
    sending the second CSI report and a third CSI report on the third CSI reporting resource, wherein the third CSI report is determined based on a sequence of priorities of the L first parts and the L second parts.

14. The method according to claim 13, wherein the priorities corresponding to the L first parts are determined based on priorities corresponding to the L sub-configurations.

15. The method according to claim 13 or 14, wherein the L second parts comprise L pieces of wideband CSI and L pieces of sub-band CSI, priorities of the L pieces of wideband CSI are higher than priorities of the L pieces of sub-band CSI, a sequence of the priorities of the L pieces of sub-band CSI is determined based on the priorities corresponding to the L sub-configurations, the sub-band CSI comprises odd-numbered sub-band CSI and even-numbered sub-band CSI, and a priority of the odd-numbered sub-band CSI is higher than that of the even-numbered sub-band CSI.

16. The method according to claim 13 or 14, wherein the L second parts comprise L pieces of wideband CSI, L pieces of odd-numbered sub-band CSI, and L pieces of even-numbered sub-band CSI, priorities of the L pieces of wideband CSI are higher than priorities of the L pieces of odd-numbered sub-band CSI, the priorities of the L pieces of odd-numbered sub-band CSI are higher than priorities of the L pieces of even-numbered sub-band CSI, a sequence of the priorities of the L pieces of odd-numbered sub-band CSI is determined based on the priorities corresponding to the L sub-configurations, and a sequence of the priorities of the L pieces of even-numbered sub-band CSI is determined based on the priorities corresponding to the L sub-configurations.

17. The method according to any one of claims 14 to 16, wherein the priorities corresponding to the L sub-configurations are determined based on an index corresponding to each sub-configuration.

18. A channel state information CSI transmission method, comprising:

sending first configuration information, wherein the first configuration information indicates L sub-configurations, each of the L sub-configurations indicates at least one reference signal resource in a reference signal resource set, and L is a positive integer; and
receiving a first CSI report, wherein the first CSI report comprises N pieces of first CSI, the N pieces of first CSI are determined based on N first sub-configurations, at least one reference signal resource indicated by the first sub-configuration comprises a first reference signal resource, the first reference signal resource is earlier than a first time domain resource corresponding to the first sub-configuration in time domain, the first time domain resource corresponds to M sub-configurations, the first time domain resource is determined based on the first configuration information, the M sub-configurations belong to the L sub-configurations, M is a positive integer less than or equal to L, and N is a positive integer less than or equal to M.

19. The method according to claim 18, wherein the first reference signal resource is further located in a first time segment, and the first time segment is a discontinuous reception DRX active time segment of a terminal device.

20. The method according to claim 18 or 19, wherein the first configuration information indicates any one of reconfiguration, serving cell activation, bandwidth part BWP switching, and semi-persistent CSI activation.

21. The method according to any one of claims 18 to 20, wherein that the first time domain resource corresponds to the M sub-configurations, and the first time domain resource is determined based on the first configuration information comprises:
the M first time domain resources are determined based on the first configuration information, the M first time domain resources are in one-to-one correspondence with the M sub-configurations, and a time domain location of the first time domain resource is determined based on a reference signal resource indicated by a sub-configuration corresponding to the first time domain resource.

22. The method according to any one of claims 18 to 20, wherein that the first time domain resource corresponds to the M sub-configurations, and the first time domain resource is determined based on the first configuration information comprises:
one first time domain resource corresponds to M sub-configurations, the first time domain resource is determined based on the first configuration information, and a time domain location of the first time domain resource is determined based on a reference signal resource indicated by the L sub-configurations.

23. The method according to any one of claims 18 to 22, wherein the M sub-configurations are sub-configurations that are of the L sub-configurations and that are triggered by a network device.

24. A channel state information CSI transmission method, comprising:

sending first configuration information, wherein the first configuration information indicates L sub-configurations, each of the L sub-configurations indicates at least one reference signal resource in a reference signal resource set, and L is a positive integer; and
receiving a second CSI report on a first CSI reporting resource, wherein the second CSI report comprises A pieces of third CSI, the A pieces of third CSI are updated based on A third sub-configurations, a second time domain resource corresponding to the third sub-configuration is earlier than the first CSI reporting resource in time domain, the second time domain resource is determined based on a last reference signal resource in time domain indicated by each of the M sub-configurations, the M sub-configurations are in one-to-one correspondence with the M second time domain resources, the first CSI reporting resource is indicated by the first configuration information, M is a positive integer less than or equal to L, and A is a positive integer less than or equal to M.

25. The method according to claim 24, wherein the second CSI report further comprises M-A pieces of non-updated fourth CSI, the M-A pieces of fourth CSI correspond to M-A fourth sub-configurations, the M-A fourth sub-configurations are sub-configurations other than the A third sub-configurations in the M sub-configurations, and a second time domain resource corresponding to the fourth sub-configuration is later than the first CSI reporting resource in time domain.

26. The method according to claim 24 or 25, wherein that the M second time domain resources are determined based on the last reference signal resource in time domain indicated by each of the M sub-configurations comprises:
the second time domain resource and a last reference signal resource in time domain indicated by a corresponding sub-configuration are spaced apart by a first value, and the first value is CSI computation time.

27. A communication apparatus, comprising:
a processor, wherein the processor is configured to execute a program or instructions, to enable the apparatus to perform the method according to any one of claims 1 to 6, enable the apparatus to perform the method according to any one of claims 7 to 9, enable the apparatus to perform the method according to any one of claims 10 to 12, or enable the apparatus to perform the method according to any one of claims 13 to 17.

28. A communication apparatus, comprising:
a processor, wherein the processor is configured to execute a program or instructions, to enable the apparatus to perform the method according to any one of claims 18 to 23, or enable the apparatus to perform the method according to any one of claims 24 to 26.

29. A computer-readable storage medium, wherein the computer-readable storage medium stores a computer program, and when the computer program runs on a computer, the computer is enabled to perform the method according to any one of claims 1 to 6, the method according to any one of claims 7 to 9, the method according to any one of claims 10 to 12, the method according to any one of claims 13 to 17, the method according to any one of claims 18 to 23, or the method according to any one of claims 24 to 26.

30. A computer program product, comprising computer program code, wherein when the computer program code is run, the method according to any one of claims 1 to 6, the method according to any one of claims 7 to 9, the method according to any one of claims 10 to 12, the method according to any one of claims 13 to 17, the method according to any one of claims 18 to 23, or the method according to any one of claims 24 to 26 is implemented.

FIG. 1

Reference signal resource set used for channel measurement

Reference signal resource set used for interference measurement

Sub-configuration #1

Sub-configuration #2

...

| CSI-RS resource #1 | CSI-RS resource #2 |

| CSI-RS resource #3 | CSI-RS resource #4 |

...

| Interference measurement resource #1 | Interference measurement resource #2 |

| Interference measurement resource #3 | Interference measurement resource #4 |

...

FIG. 2

FIG. 3

FIG. 4

FIG. 5

CSI-RS
resource #1

CSI-RS
resource #2

$Z_{1\,ref(n)}'$

$Z_{2\,ref(n)}'$

Valid/updated
CSI not included

PUSCH

Time

FIG. 6

200

Network device

Terminal device

S210 Send first configuration information

S220 Determine a first time domain resource
corresponding to M sub-configurations

S230 Determine N first sub-configurations from
the M sub-configurations based on time domain
locations of the first time domain resource and
reference signal resources indicated by the M
sub-configurations

S240 Send a first CSI report

FIG. 7

EP 4 750 194 A1

FIG. 8

FIG. 9

FIG. 10

49

| CSI-RS resource #1 indicated by a sub-configuration 1 | Second time domain resource 1 corresponding to a sub-configuration 1 | CSI-RS resource #2 indicated by a sub-configuration 1 | Second time domain resource 2 corresponding to a sub-configuration 2 |

First value

CSI reporting resource

Time

## FIG. 11

400

| Network device | | Terminal device |

S410 Send first configuration information

S420 Determine a quantity P of available CPUs in a first time unit

S430 Determine B fourth sub-configurations and M–B fifth sub-configurations based on the quantity P of available CPUs, a quantity of CPUs corresponding to M sub-configurations, and priorities corresponding to the M sub-configurations

S440 Send a third CSI report

## FIG. 12

500

| Network device | | Terminal device |

S510 Send first configuration information and second configuration information →

S520 Determine a first CSI report and a second CSI report

S530 Determine a third CSI reporting resource

S540 Send the second CSI report and a third CSI report ←

**FIG. 13**

600

| Network device | | Terminal device |

S610 Send first configuration information and second configuration information →

S620 Determine a first CSI report and a second CSI report

S630 Send the first CSI report and the second CSI report ←

**FIG. 14**

700

| Network device | | Terminal device |

S710 Send first configuration information

S720 Determine a quantity of activated CSI-RS resources and a quantity of activated CSI-RS ports

FIG. 15

Communication apparatus 700

Interface unit 710

Processing unit 720

FIG. 16

Processor 810

Interface 830

800

Memory 820

FIG. 17

Antenna

Control circuit

91

90

Memory ⟷ Processor

92

Input/Output apparatus

FIG. 18

## INTERNATIONAL SEARCH REPORT

| | International application No. |
|---|---|
| | **PCT/CN2024/105518** |

**A. CLASSIFICATION OF SUBJECT MATTER**

H04W 72/0446(2023.01)i

According to International Patent Classification (IPC) or to both national classification and IPC

**B. FIELDS SEARCHED**

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

CNKI; CNTXT; DWPI; ENTXTC; 3GPP: 子配置, 多, 配置, CSI, 参考, 资源, 上报, 报告, 丢弃, 发送, 更新, 时域, 时问, 晚于, 不早于, CPU, 指示, sub-configuration, multiple, configur+, reference, resource, report, discard, send, update, time domain, time, indicat+

**C. DOCUMENTS CONSIDERED TO BE RELEVANT**

| Category* | Citation of document, with indication, where appropriate, of the relevant passages | Relevant to claim No. |
|---|---|---|
| A | CN 109391432 A (HUAWEI TECHNOLOGIES CO., LTD.) 26 February 2019 (2019-02-26) description, paragraphs 7-125 | 1-30 |
| A | CN 107294648 A (CHINA MOBILE GROUP DESIGN INSTITUTE CO., LTD. et al.) 24 October 2017 (2017-10-24) entire document | 1-30 |
| A | CN 108702226 A (SAMSUNG ELECTRONICS CO., LTD.) 23 October 2018 (2018-10-23) entire document | 1-30 |
| A | US 2019207722 A1 (ZTE CORP.) 04 July 2019 (2019-07-04) entire document | 1-30 |
| A | US 2020119797 A1 (HUAWEI TECHNOLOGIES CO., LTD.) 16 April 2020 (2020-04-16) entire document | 1-30 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **02 September 2024** | **09 September 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/105518**

| Patent document cited in search report | | | Publication date (day/month/year) | Patent family member(s) | | | Publication date (day/month/year) |
|---|---|---|---|---|---|---|---|
| CN | 109391432 | A | 26 February 2019 | WO | 2019029488 | A1 | 14 February 2019 |
| CN | 107294648 | A | 24 October 2017 | | None | | |
| CN | 108702226 | A | 23 October 2018 | EP | 3420653 | A1 | 02 January 2019 |
| | | | | US | 2017245165 | A1 | 24 August 2017 |
| | | | | PL | 3420653 | T3 | 08 March 2021 |
| | | | | ES | 2967182 | T3 | 29 April 2024 |
| | | | | US | 2020329392 | A1 | 15 October 2020 |
| | | | | EP | 3780476 | A1 | 17 February 2021 |
| | | | | WO | 2017146475 | A1 | 31 August 2017 |
| | | | | HUE | 052952 | T2 | 28 May 2021 |
| | | | | ES | 2840149 | T3 | 06 July 2021 |
| US | 2019207722 | A1 | 04 July 2019 | WO | 2019029343 | A1 | 14 February 2019 |
| | | | | JP | 2020530241 | A | 15 October 2020 |
| | | | | KR | 20210121267 | A | 07 October 2021 |
| | | | | JP | 2022116202 | A | 09 August 2022 |
| | | | | EP | 3512150 | A1 | 17 July 2019 |
| | | | | US | 2021036815 | A1 | 04 February 2021 |
| | | | | KR | 20200038986 | A | 14 April 2020 |
| | | | | CN | 108111278 | A | 01 June 2018 |
| | | | | IN | 202047000939 | A | 24 January 2010 |
| US | 2020119797 | A1 | 16 April 2020 | EP | 3637838 | A1 | 15 April 2020 |
| | | | | WO | 2018228571 | A1 | 20 December 2018 |
| | | | | CN | 109151887 | A | 04 January 2019 |
| | | | | IN | 202037001754 | A | 14 February 2020 |

Form PCT/ISA/210 (patent family annex) (July 20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311021141